# EUROPÄISCHE PATENTANMELDUNG

(11) **EP 0 863 359 A1**
(43) Veröffentlichungstag der Anmeldung: **09.09.1998**
(21) Anmeldenummer: 98100356.9
(22) Anmeldetag: 12.01.1998
(51) Int. Cl.: F16L 55/165, E03F 3/06

(54) **Verfahren und Vorrichtung zum Herstellen eines Schlauchs für die Auskleidung von Rohrleitungen und Kanalsystemen**

(30) Priorität: 07.03.1997 DE 19709350; 19.09.1997 DE 19741340
(71) Anmelder: Rothenberger Rohrsanierung GmbH, 65779 Kelkheim / Ts (DE)
(72) Erfinder: Henze, Michael, Dipl.-Ing., 63500 Seligenstadt (DE)
(74) Vertreter: Zapfe, Hans, Dipl.-Ing.

(57) **Zusammenfassung**

Beim Herstellen eines Schlauchs für die Auskleidung von Rohrleitungen und Kanalsystemen aus Faserwerkstoffen, die mit einem aushärtbaren Harz imprägnierbar sind, werden die Ränder (6a, 6b) von Faserstreifen (6, 19) auf dem Umfang des Schlauchs mit mindestens einem in Längsrichtung verlaufenden, fest verbundenen Überlappungsbereich (7a, 7b) versehen. Zur Erzielung eines stabilen und dehnfähigen Vorprodukts für eine Imprägnierung mit Harz werden,
a) für die Faserstreifen (6, 19) elastisch dehnbare Faserwerkstoffe verwendet,
b) die Ränder (6a, 6b) der Faserstreifen (6, 19) in den Überlappungsbereichen (7a, 7b) durch einen thermischen Prozeß irreversibel miteinander verbunden, indem
   entweder
   b1) ein aushärtbares Harz zwischen die Ränder (6a, 6b) eingebracht und durch Energiestrahlung ausgehärtet wird,
      oder
   b2) die Faserwerkstoffe im Überlappungsbereich (7a, 7b) durch oberflächliches Anschmelzen und Druck miteinander verbunden werden. In diesem Fall haben die Faserwerkstoffe auf entgegengesetzten Oberflächen vorzugsweise unterschiedliche Schmelztemperaturen und werden von ihren Berührungsflächen her auf eine Temperatur aufgeheizt, die zwischen den Schmelztemperaturen der beiden Faserwerkstoffe liegt.

## Beschreibung

Die Erfindung betrifft ein Verfahren zum Herstellen eines Schlauchs für die Auskleidung von Rohrleitungen und Kanalsystemen mit mindestens einer aus einem Faserwerkstoff bestehenden, mit einem aushärtbaren Harz imprägnierbaren Innenlage, deren Ränder durch Aufeinanderlegen auf einen gleichen oder einen anderen Faserstreifen auf dem Umfang des Schlauchs mit mindestens einem in Längsrichtung verlaufenden fest verbundenen Überlappungsbereich versehen werden und die anschließend mit einer gegenüber dem Harz undurchlässigen Außenfolie umgeben wird.

Derartige Schläuche werden auch als "Liner" bezeichnet. Sowohl ihre Herstellung als auch ihre Verlegung bei der Sanierung von Rohrleitungen und Kanalsystemen sind kompliziert und zeitaufwendig, und zwar insbesondere dann, wenn es sich um die Herstellung und Verarbeitung von Schläuchen größerer Länge handelt. Das tragende Element ist nach der Aushärtung die schlauchförmig geschlossene Lage aus dem imprägnierten Faserwerkstoff. Zur Erzielung einer hohen Festigkeit muß das Harz bzw. der Faserwerkstoff soweit wie irgend möglich frei von Hohlräumen sein, die durch Lufteinschlüsse aber auch durch ungenügende Tränkung des Faserwerkstoffs entstehen können. Die Aushärtung des Harzes kann entweder durch Wärme, sichtbares Licht oder ultraviolettes Licht erfolgen. Für diesen Zweck ist eine ganz Reihe von Harzmaterialien im Handel, die zur Beschleunigung der Aushärtung mit Aktivatoren und Beschleunigern versetzt sein können. Bekannt sind auch kalt aushärtbare Harze, bei denen die Aushärtung verzögert eingestellt wird, bei denen sich aber während des Härteprozesses eine Temperaturerhöhung einstellt.

Derartige Schläuche oder Liner können beispielsweise in flachliegendem Zustand in den Sanierungsbereich eingezogen und nach Anbringung von sogenannten Endverschlüssen durch ein unter Druck stehendes Medium aufgebläht und gegen die zu sanierenden Wandungen gepreßt werden. Eine andere Methode des Einbringens des Schlauches oder Liners besteht im sogenannten Umstülpen oder Evertieren. In beiden Fällen ist der imprägnierte Faserwerkstoff zum Zwecke der Handhabung des Schlauchs auf der Außenseite von einer gasundurchlässigen Außenlage aus einer schlauchförmigen Folie umgeben, die selbstverständlich auch harzdicht ist. Beim Aufblasen eines solchen Schlauchs kommt nun diese Außenfolie mit der zu sanierenden Wandfläche in Berührung, und der imprägnierte Faserwerkstoff liegt innen. Um nun Strahlungsquellen für die Aushärtung durch einen solchen aufgeblasenen Schlauch hindurch bewegen zu können, wird in diesen Schlauch auf der Baustelle eine schlauchförmige Innenfolie eingezogen. Beim Umstülpen oder Evertieren ist diese Maßnahme überflüssig, da durch den Umstülpvorgang der ursprünglich innenliegende imprägnierte Faserwerkstoff nach außen gelangt, jedoch ist der Vorgang des Umstülpens und des nachträglichen Transports der Strahlungsquellen durch den umgestülpten Schlauch keine einfach zu bewerkstelligende Maßnahme.

Besonders schwierig ist hierbei die Durchführung einer gleichmäßigen Imprägnierung, und zwar insbesondere dann, wenn mindestens eine der Oberflächen des Faserwerkstoffs mit einer Folie versehen ist. Man ist daher in der Regel so verfahren, daß man den Schlauch oder Liner erst auf der Baustelle fertig konfektioniert hat, indem man die Tränkung oder Imprägnierung auf der Baustelle durchgeführt hat. Beim Umstülpen oder Evertieren hat man sogar Verfahren angewandt, den Faserwerkstoff erst an der Stelle des Umstülpens mit dem jeweiligen Harz zu tränken. Diese Maßnahme erfordert die Bereitstellung von entsprechenden Vorrichtungen und deren Betrieb auf der Baustelle, so daß eine ständige Verlegung der Vorrichtungen erforderlich ist.

Durch die DE 22 40 153 C2 und die US 4 009 063 ist es bekannt, bei der Herstellung eines Sanierungsschlauchs für Rohrleitungen und Kanalsysteme einen imprägnierfähigen Faserstreifen vor dem Imprägnieren mit einem aushärtbaren Harz um einen Innenschlauch aus Folie herumzufalten und den sich dabei ausbildenden Überlappungsbereich durch Nähen, Kleben oder Schweißen zu verbinden. Beim Nähen oder Schweißen entstehen jedoch eingefallene Stellen, die wie eine Steppnaht in einem wattierten Stoff aussehen und die Festigkeit des ausgehärteten Schlauchs beeinträchtigen. Dies ist insbesondere dann der Fall, wenn nur ein einziger Faserstreifen eingesetzt wird, weil dann keine statistische Verteilung von Schwachstellen eintritt. Über die Art des Klebers oder des Klebevorgangs werden keine Aussagen gemacht. Breitflächige Verklebungen behindern jedoch den Imprägniervorgang und das vor dem Imprägnieren erforderliche Evakuieren, außerdem dringen die meisten Klebstoffe nicht genügend tief in den Faserstreifen ein, so daß die Gefahr besteht, daß Oberflächenteile des Faserstreifens beim Auftreten einer Zugspannung mit dem Klebstoff herausgerissen werden. Die meisten Kleber enthalten Lösungsmittel und/oder Weichmacher, die in dem endgültig eingebrachten Imprägnierharz durch Blasenbildung Hohlräume und damit Schwachstellen erzeugen. Schließlich werden zahlreiche Kleber von den später eingebrachten Imprägnierharzen angelöst oder aufgeweicht, und sie verbinden sich auch nicht mit den Imprägnierharzen.

Durch die EP 0 275 060 A1 ist es zu dem gleichen Zweck bekannt, einen Faserstreifen mit einer bereits aufgebrachten Außenfolie um einen Innenschlauch herumzulegen und dabei die Kanten des Faserstreifens stumpf aufeinander stoßen zu lassen und zu vernähen. Um die Naht, die auch durch die Außenfolie hindurchgeht, abzudichten und zu verstärken, wird nachfolgend ein Nahtstreifen aufgeklebt. Hierbei ist es jedoch nicht möglich, weitere Faserstreifen aufzubringen, weil die Außenfolie die gleichzeitige Evakuierung und die Imprägnierung aller Faserstreifen verhindern würde. Der bekannte Schlauch wird durch einen sogenannten Evertiervorgang in die zu sanierende Rohrleitung eingebracht und erst hierbei imprägniert, derart, daß der Faserstreifen nach außen und die Außenfolie nach innen gelangt. Der Zweck ist die Verbindung des imprägnierten Faserstreifens mit der Rohrleitung.

Durch die W0 91/18234 ist ein ähnliches Verfahren bekannt, bei dem die überlappungsfreie Naht durch einen thermischen Stumpfschweißvorgang des bereits mit einer Innenfolie versehenen Faserstreifens durchgeführt wird. Danach wird der Verbund aus Innenfolie und Faserstreifen durch zwei Harzbäder geführt und darin imprägniert und nachfolgend mit einer Außenfolie versehen, die verschweißt wird. Eine solche Stumpfschweißnaht bildet jedoch eine ausgesprochene Schwachstelle, so daß auf die Naht auch in diesem Falle eine Nahtverstärkungsstreifen aufgeflämmt werden muß. Dieses Verfahren setzt eine sehr komplizierte Imprägnierungsanlage voraus.

In den vorstehend genannten Fällen ist die radiale Dehnfähigkeit des Schlauchs eng begrenzt, insbesondere deswegen, weil der Nahtverstärkungsstreifen selbst an der Dehnung nicht teilnimmt und zum Ablösen neigt. Man hat daher solche Nahtverstärkungsstreifen auf den bereits imprägnierten Schlauch zusätzlich aufgesteppt, wodurch Löcher und Lecks im Schlauchverbund entstehen.

Durch die EP 0 510 306 A1, die DE 41 30 459 A1, die DE 44 27 633 C2 und die DE 44 45 166 A2 ist es bekannt, Überlappungsbereiche von einem oder mehreren Faserstreifen nicht miteinander zu verbinden, so daß Sanierungsschläuche von besonders guter Dehnfähigkeit erhalten werden. Dies hat jedoch den Nachteil, daß die Überlappungsbereiche relativ breit gehalten werden müssen, um bei der Aufweitung die Überlappung nicht zu verlieren. Da die Dehnung bei der Verlegung durch Druckluft erfolgt, behindern die Nachbarstreifen eine Verschiebung in den breiten Überlappungsbereichen. Andererseits können sich die Ränder der Faserstreifen bei der Weiterverarbeitung und/oder beim Transport verschieben, umklappen oder Falten bilden.

In allen vorstehend genannten Fällen wird die Herstellung von Sanierungsschläuchen beschrieben, die fertig imprägniert sind und sehr spezielle Imprägnierungsverfahren und entweder komplizierte Nachbehandlungen voraussetzen oder bei der Weiterverarbeitung und beim Transport durch ihren labilen Aufbau die beschriebenen Probleme verursachen.

Der Erfindung liegt daher die Aufgabe zugrunde, ein Verfahren der eingangs genannten Gattung anzugeben, das zu einem stabilen und dehnfähigen Vorprodukt für eine endgültige Imprägnierung führt und einfach auszuführen ist.

Die Lösung der gestellten Aufgabe erfolgt bei dem eingangs angegebenen Verfahren erfindungsgemäß dadurch, daß
a) für die mindestens eine Innenlage ein mindestens in Umfangsrichtung des Schlauchs elastisch dehnbarer Faserwerkstoff verwendet wird, und daß
b) die Ränder der Innenlage vor der Weiterverarbeitung im Überlappungsbereich entweder kontinuierlich oder abschnittsweise durch einen thermischen Prozeß an Verbindungsstellen irreversibel miteinander verbunden werden, und die anschließend mit einer gegenüber dem Harz undurchlässigen Außenfolie umgeben wird, indem entweder
   b1) ein aushärtbares Harz im Überlappungsbereich zwischen die Ränder eingebracht und nach dem mindestens teilweisen Eindringen in beide Ränder durch Energiestrahlung durch den Faserwerkstoff hindurch ausgehärtet wird, oder
   b2) der Faserwerkstoff mindestens einer der Ränder im Überlappungsbereich oberflächlich angeschmolzen wird, worauf die Ränder unter Druckanwendung miteinander verschmolzen werden.

Die Erfindung enthält also - zur Lösung der gleichen Aufgabe - zwei alternative Lösungsgedanken, die auf dem selben mechanischen Prinzip beruhen und beide im Durchlaufverfahren bzw. auch in kinematischer Bewegungsumkehrung durchführbar sind und die zu einer ausreichenden Festigkeit der Verbindung gegenüber Scherspannungen führen.

Bei der Lösung mit dem Merkmal b1) wird zwischen die zu den Oberflächen der Faserstreifen parallelen Berührungsflächen eine kontinuierliche, unterbrochene, changierende oder mäandrierende, vorzugsweise schmale, Harzspur eingebracht, die genügend tief in die Faserstreifen eindringt, ohne dessen Faserstruktur in unmittelbarer Umgebung der Harzspur zu zerstören oder Einfallstellen zu erzeugen, und die bei der abschließenden Imprägnierung mit dem Imprägnierharz verträglich bzw. kompatibel ist und die Mikroströmungen bei der Imprägnierung nicht behindert.

Bei der Lösung mit dem Merkmal b2) wird mindestens eine der Berührungsflächen der Faserstreifen oberflächlich angeschmolzen, und zwar genügend. tief, und unter Druckanwendung mit der jeweils anderen Oberfläche verschmolzen, gleichfalls ohne die Faserstruktur in unmittelbarer Umgebung des Schmelzbereichs vollständig zu zerstören. Hierbei kann auf den Zusatz von Fremdstoffen vollständig verzichtet werden, so daß sich die Frage einer Kompatibilität gar nicht erst stellt.

Das Merkmal b2) beruht auf der Überlegung, daß die höherschmelzenden Fasern ihre Struktur und die Zwischenräume behalten, das Fasermaterial also nicht "einfällt" oder "einsinkt". Andererseits werden die niedrigschmelzenden Fasern weich bzw. klebrig und verbinden sich mit den höherschmelzenden Fasern. Es hat sich überraschend gezeigt, daß die Verbindung durch größere Körperkräfte senkrecht zu den Berührungsflächen unter Herausreißen einzelner Fasern getrennt werden kann, daß aber die Verbindung gegenüber tangentialen Kräften durchaus fest genug ist, um die Weiterverarbeitung zu überleben. Dadurch, daß die Erwärmung von der Berührungsfläche aus erfolgt, also von innen heraus, stellt sich nach beiden Seiten ein fallender Temperaturgradient ein, bei dem der allergrößte Teil der Faserstruktur auch der niedrigschmelzenden Fasern erhalten bleibt.

Damit bleiben sowohl die Evakuierungs- und Imprägnierfähigkeit als auch die Transparenz für die Härtungsstrahlung - auch im Nahtbereich - erhalten. Die Erfindung beruht auf der gemeinsamen Berücksichtigung des Schmelzverhaltens der niedrigschmelzenden Fasern, ihrer Verklebung mit den höher schmelzenden Fasern ohne wesentlichen Verlust an Porigkeit, so daß also kein störendes "Einfallen" der Faserstreifen an der Verbindungsstelle erfolgt. Es kann angenommen werden, daß die höherschmelzenden Fasern hierbei eine Stützfunktion für die niedrigschmelzenden Fasern ausüben.

Mittels der Erfindung lassen sich Vorprodukte für die Endimprägnierung erzeugen, die in radialer Richtung dehnbar sind, unerwünschte Verschiebungen, ein Umschlagen von Rändern und/oder Faltenbildungen der Faserstreifen beim Transport und bei der Weiterverarbeitung verhindern und zu keinen Porositäten, Kapillaren (Dampfdurchtritt) und Querschnittsschwächungen durch Nähte oder Schweißungen führen (sogenannter Steppnaht- oder Wattierungseffekt). Dadurch ist die Anzahl der Faserstreifen - in Umfangsrichtung und in der Dicke gesehen - nicht begrenzt. Es wird jedoch betont, daß die Erfindung auch darin besteht und sich bereits dann vorteilhaft auswirkt, wenn auf einem Schlauchumfang von 360 Grad nur eine Überlappungsstelle vorgesehen ist und wenn nur eine Innenlage vorhanden ist.

Auch wird das Harz der ausgehärteten Harzstreifen nicht angelöst oder aufgeweicht, wie z.B. ein Kleber, der ein Fremdstoff ist, sondern geht vielmehr mit dem Harz der Endimprägnierung einen untrennbaren Verbund ein. Schließlich behindern die Harzstreifen auch nicht den Harzfluß oder die Evakuierung bei der Endimprägnierung. Es handelt sich um einen irreversiblen Vorgang, der nicht wieder aufgehoben werden kann.

Durch die Elastizität der Innenlage vor dem Aushärten der Endimprägnierung wird nicht nur eine Anpassung bzw. ein Anschmiegen des Schlauchs an Unregelmäßigkeiten der zu sanierenden Rohrleitung unter der Wirkung eines Druckmediums ermöglicht, sondern es entsteht auch eine Vorspannung, die im Harz "eingefroren" wird und ähnlich wie bei Spannbeton zu einer Steigerung der Festigkeit und Druckdichtigkeit, sowie zu einer statischen Berechenbarkeit des ausgehärteten Schlauchs führt. Als Druckmedien können heiße Gase und Wasserdampf sowie entsprechend temperiertes Wasser verwendet werden.

Es entstehen keine Trennungen der Überlappungsbereiche durch ungewollte Querverschiebungen der Faserstreifen zueinander und/oder Ausdehnungen und damit keine Schwachstellen, sondern vielmehr in gewisser Weise "nahtlose" Innenlagen 12, und zwar selbst dann, wenn die Überlappungsbereiche schmal gehalten werden, was die radiale Dehnfähigkeit begünstigt, da Verschiebungen von mehreren Innenlagen gegeneinander beim Dehnen nicht erforderlich sind. Diese Querverschiebungen treten beim Stand der Technik bekanntlich dadurch auf, daß die unverbundenen Folienstreifen selbst wenig dehnfähig sind und die Überlappungsbereiche auf dem Umfang versetzt angeordnet sein müssen, um Dickenanhäufungen zu vermeiden.

Es ist dabei besonders vorteilhaft, wenn als aushärtbares Hart für die Verbindung der Ränder der Innenlage das gleiche Harz verwendet wird, wie für die Imprägnierung des Restquerschnitts der Innenlage.

Ein weiterer Vorteil entsteht dann, wenn die Verbindungsstelle(n) in Umfangsrichtung des Schlauchs schmal ist/sind im Verhältnis zur Breite des jeweiligen Überlappungsbereichs.

Bei relativ breiten Überlappungsbereichen ist es auch möglich und vorteilhaft, in mindestens einem, bzw. dem breitesten Überlappungsbereich mehr als eine Verbindungsstelle zu erzeugen.

Ein solcher Schlauch kann in besonders vorteilhafter Weise von Anfang an mit einem Innenschlauch versehen werden, dies geschieht in der Weise, daß die mindestens eine, aus Faserwerkstoff bestehende Innenlage um einen gegenüber dem Harz undurchlässigen Innenschlauch herumgelegt wird und daß das Harz des mindestens einen Überlappungsbereichs nach dem Aufbringen durch Energiestrahlung ausgehärtet wird.

In diesem Falle ist der Innenschlauch eine vorteilhafte Fertigungshilfe für die Innenlage aus dem Fasermaterial bzw. aus den Faserstreifen, und es ist nicht mehr erforderlich, nachträglich noch einen Innenschlauch einzuziehen.

Die Herstellung kann mit einer beliebigen Anzahl von Überlappungsbereichen auf dem Umfang der Innenlage erfolgen, nämlich dadurch, daß die. Innenlage mit an mindestens einer Überlappungsstelle aufeinanderliegenden Wandungsteilen über einen Kalibrierkörper geführt wird, und daß nach Einbringung des aushärtbaren Harzes an jeder der Überlappungsstellen dessen Aushärtung durchgeführt wird.

Will man das Verfahren in der Horizontalen durchführen, so wird in besonders zweckmäßiger Weise so verfahren, daß die mindestens eine, aus Faserwerkstoff bestehende Innenlage aus zwei Faserstreifen gebildet wird, von denen der eine breiter ist als der halbe Umfang des Innenschlauchs und der andere maximal die gleiche Breite hat wie der halbe Umfang des Innenschlauchs, daß zunächst der breitere Faserstreifen, auf eine Ablage gefördert und mit seinen beiden Rändern einwärts gefaltet wird, daß der schmälere Faserstreifen entweder vor oder nach der Faltung des breiteren Faserstreifens unter Herstellung zweier Überlappungsbereiche der beiden Ränder auf der gleichen Ablage abgelegt wird, wobei in die beiden Überlappungsbereiche das aushärtbare Harz eingebracht wird, wobei entweder
b1) in beiden Überlappungsbereichen ein aushärtbares Harz zwischen die Ränder eingebracht und nach dem mindestens teilweisen Eindringen in die aufeinanderliegenden Ränder durch Energiestrahlung durch den Faserwerkstoff hindurch ausgehärtet wird, oder
b2) der Faserwerkstoff jeweils einer der Ränder in jedem Überlappungsbereich oberflächlich angeschmolzen wird, worauf die Ränder unter Druckanwendung miteinander verschmolzen werden.

Die Ablage kann dabei aus einem einfachen Arbeitstisch, in vorteilhafter Weise aus einem Förderband bestehen. Das Ablegen erfolgt dabei auch mittelbar, beispielsweise dann, wenn sich auf der Ablage ein Innenschlauch befindet.

Diese Fertigungsweise hat den großen Vorteil, daß der Faltvorgang immer nur auf der Oberseite der Ablage stattfindet. Es ist also nicht erforderlich - wie beim Stande der Technik - Faserstreifen abwechselnd von unten nach oben und dann von oben nach unten um den zuvor gebildeten Schlauchverbund herumzufalten. Dabei entstehen nämlich besondere Probleme beim Faltvorgang auf der Unterseite. Der Stand der Technik befaßt sich auch nur mit dem Herumfalten ohne eine Verbindung der einzelnen Faserstreifen.

Eine weitere Ausgestaltung der Erfindung ermöglicht auch den Aufbau der Innenlage aus mehr als einer Innenlage aus Fasermaterial, und zwar dadurch, daß nacheinander mindestens zwei aus Faserwerkstoff bestehende Innenlagen auf der Ablage erzeugt werden und daß die erste Innenlage vor dem Aufbringen der zweiten und jeder weiteren Innenlage um 180 Grad gewendet wird.

Um hierbei Dickenanhäufungen durch die mehrfach entstehenden Überlappungsbereiche zu vermeiden, ist es besonders vorteilhaft, wenn beim Aufbau eines Schlauchs aus mehr als zwei Innenlagen aus Faserwerkstoff die Lagen der Überlappungsbereiche durch relative Querverschiebung von Faserstreifen auf den Umfang des Schlauchs verteilt werden.

Beim Aufbringen der Außenfolie, die gegenüber dem ganz zum Schluß einzubringenden Imprägnierungsharz beständig und gegenüber diesem dicht sein muß, wird in besonders vorteilhafter Weise so verfahren, daß eine Außenfolie mit einer Breite verwendet wird, die größer ist als der Umfang der letzten, aus Fasermaterial bestehenden Innenlage, und daß die Außenfolie, von unten kommend, unter Bildung eines Überlappungsbereichs um die mindestens eine Innenlage herumgefaltet und im Überlappungsbereich verschweißt wird.

Bei einem Verfahren, bei dem der Faserwerkstoff mindestens einer der Ränder im Überlappungsbereich oberflächlich angeschmolzen wird, worauf die Ränder unter Druckanwendung miteinander verschmolzen werden, wird in vorteilhafter Weise so vorgegangen, daß
a) der mindestens eine Faserstreifen auf entgegengesetzten Oberflächen zu mindestens 50 % aus unterschiedlichen Faserwerkstoffen mit unterschiedlichen Schmelztemperaturen gewählt wird,
b) in jedem Überlappungsbereich die jeweiligen Ränder eines Faserwerkstoffs mit einer niedrigeren Schmelztemperatur und eines Faserwerkstoffs mit einer höheren Schmelztemperatur aufeinandergelegt werden, und daß
c) in jedem Überlappungsbereich mindestens eine der unmittelbar benachbarten Oberflächen von ihren Berührungsflächen her auf eine Temperatur aufgeheizt wird, die zwischen den Schmelztemperaturen der beiden Faserwerkstoffe liegt.

Dies geschieht in besonders vorteilhafter Weise dadurch, daß zwischen die Ränder der Faserstreifen ein Heizgas mit einer Temperatur eingeblasen wird, die zwischen den Schmelztemperaturen der beiden Faserstreifen liegt, insbesondere dadurch, daß die Temperatur des Heizgases so gewählt wird, daß der Faserwerkstoff mit der niedrigeren Schmelztemperatur von seiner Oberfläche her örtlich begrenzt aufschmilzt und sich mit dem nicht aufschmelzenden Faserwerkstoff mit der höheren Schmelztemperatur verbindet.

Die Erfindung betrifft auch einen nach dem vorstehend beschriebenen Verfahren und seinen Varianten hergestellten Schlauch, wobei die wesentlichen Merkmale dieses Schlauchs in den Ansprüchen 20 bis 26 beschrieben sind.

Die Erfindung betrifft auch eine Vorrichtung zum Herstellen eines Schlauchs mit mindestens einer aus mindestens einem imprägnierfähigen Faserstreifen bestehenden Innenlage für die Auskleidung von Rohrleitungen und Kanalsystemen, mit einer zumindest im wesentlichen waagrechten Ablage und einer Transporteinrichtung für den Transport des Schlauchs, mit mindestens einer Vorratsrolle mit je einem imprägnierfähigen Faserstreifen, der der Ablage zuführbar ist, und mit Einrichtungen zum Herumfalten der Streifenränder.

Zur Lösung der gleichen Aufgabe ist eine solche Vorrichtung gekennzeichnet durch:
a) ein Führungssystem für die Ausbildung mindestens eines, oberhalb der Ablage liegenden Überlappungsbereiches durch Faltung der Ränder des mindestens einen Faserstreifens und durch entweder
   b1) mindestens eine Düse für die Aufbringung mindestens einer Harzspur aus einem durch Härtungsstrahlung aushärtbaren Harz ausschließlich in dem mindestens einen Überlappungsbereich zwischen den sich überlappenden Rändern, sowie durch mindestens einen gegenüber den Harzspuren angeordneten Härtungsstrahler zur Ausbildung einer auf dem Umfang geschlossenen Innenlage,
      oder durch
   b2) mindestens einen Heizkörper, der in den mindestens einen Überlappungsbereich einführbar ist und durch den der Faserwerkstoff mindestens eines der Ränder zum Herstellen einer Schmelzverbindung oberflächlich aufschmelzbar ist, sowie durch mindestens eine Andruckeinrichtung zum Verdichten der Schmelzverbindung,
      sowie durch
c) eine Einhüllvorrichtung für die Umhüllung der mindestens einen Innenlage mit einer Außenfolie.

Mit einer solchen Vorrichtung kann im unteren Grenzfall jede Innenlage aus einem einzigen Faserstreifen hergestellt werden. Für die Herstellung einer jeden Innenlage aus zwei Faserstreifen ist jedoch eine Vorrichtung besonders gut geeignet, die folgende Merkmale aufweist:
a) Zwei Vorratsrollen mit unterschiedlich breiten Faserstreifen, von denen der jeweils breitere Faserstreifen von unten zuführbar ist, und
b) ein Führungssystem für die Ausbildung zweier, oberhalb der Ablage liegender Überlappungsbereiche durch Faltung der Ränder des breiteren Faserstreifens gegenüber den Rändern des schmäleren Faserstreifens.

Im Zuge einer wiederum weiteren Ausgestaltungen der Erfindung wird mit besonderem Vorteil eine Konstruktionsvorschrift angewandt, bei der die Transporteinrichtung aus einem Förderband besteht und bei der das Führungssystem für die Faltung der Ränder des Faserstreifens aus spiegelbildlich über dem Förderband angeordneten ersten Gleitschienen besteht, die unabhängig voneinander quer zur Laufrichtung des Förderbandes verstellbar sind.

Hierdurch kann die Transporteinrichtung nicht nur an die Herstellung unterschiedlich breiter Schläuche angepaßt werden (die Breite bezieht sich auf den flachliegenden Schlauch), sondern die Einstellmöglichkeiten führen auch dazu, daß die Überlappungsbereiche auf dem Umfang versetzt zueinander angeordnet werden können. Die einzelnen Möglichkeiten hierzu werden in der Detailbeschreibung noch näher erläutert.

Weitere vorteilhafte Ausgestaltungen des Erfindungsgegenstandes ergeben sich aus den übrigen Vorrichtungsansprüchen; ihre besonderen Vorteile sind gleichfalls in der Detailbeschreibung näher erläutert.

Ausführungsbeispiele des Erfindungsgegenstandes, die einzelnen Verfahrensschritte und unterschiedliche Endprodukte werden nachstehend anhand der Figuren 1 bis 22 näher beschrieben, wobei zumindest die einzelnen Verfahrensschritte kontinuierlich betrieben werden.

Es zeigen:
- Figur 1: ein erstes Ausführungsbeispiel einer ersten Variante eines ersten Verfahrensschritts für ein Zwischenprodukt mit Harzauftrag gemäß Figur 5 und eine Vorrichtung hierfür in einer Seitenansicht,
- Figur 2: eine Draufsicht auf den Gegenstand von Figur 1,
- Figur 3: eine perspektivische Darstellung der wesentlichen Elemente aus den Figuren 1 und 2 mit Zufuhr von Harz auf die bereits herumgefalteten Ränder des breiteren Faserstreifens vor dem Aufbringen des schmäleren Faserstreifens in vergrößertem Maßstab,
- Figur 4: eine perspektivische Darstellung der wesentlichen Elemente aus den Figuren 1 und 2 mit Zufuhr von Harz auf die Ränder des flachliegenden schmäleren Faserstreifens vor dem Herumfalten der Ränder des breiteren Faserstreifens,
- Figur 5: einen Querschnitt durch ein erstes Zwischenprodukt des Verfahrens nach den Figuren 1, 2 und 3,
- Figur 6: einen Querschnitt durch ein erstes Zwischenprodukt des Verfahrens nach den Figuren 1, 2 und 4,
- Figur 7: einen letzten Verfahrensschritt vor dem Imprägnieren zur Umhüllung von Zwischenprodukten aus den Verfahren nach den Figuren 1 bis 4 mit einer Außenfolie nach Figur 9 oder 10,
- Figur 8: eine Draufsicht auf den Gegenstand nach Figur 7,
- Figur 9: einen Querschnitt durch ein erstes vorläufiges Endprodukt des Verfahrens nach den Figuren 1 bis 3 nach dem Wenden um 180 Grad und nach dem Umhüllen mit einer zweiten Innenlage aus einem Faserwerkstoff sowie nach dem Umhüllen mit einer Außenfolie gemäß den Figuren 7 und 8
- Figur 10: einen Querschnitt durch ein zweites vorläufiges Endprodukt des Verfahrens nach den Figuren 1, 2 und 4 nach dem Wenden um 180 Grad und nach dem Umhüllen mit einer zweiten Innenlage aus einem Faserwerkstoff sowie nach dem Umhüllen mit einer Außenfolie gemäß den Figuren 7 und 8,
- Figur 11: eine perspektivische Darstellung einer zweiten Variante der Verfahrensführung zur Herstellung eines Schlauchs aus einem einzigen Faserstreifen unter Bildung einer Mittelnaht durch ein Schmelzverfahren ohne Zusatzwerkstoff,
- Figur 12: einen vergrößerten Querschnitt durch den Überlappungsbereich der Ränder vor Herstellung der Naht entlang der Linie A-A in Figur 11,
- Figur 13: einen vergrößerten Querschnitt durch den Überlappungsbereich während der Erwärmung der Ränder im Nahtbereich entlang der Linie B-B,
- Figur 14: einen vergrößerten Querschnitt durch den fertigen Nahtbereich entlang der Linie C-C in Figur 11,
- Figur 15: eine perspektivische Ansicht eines doppelkeilförmigen Heizkörpers mit elektrischer Beheizung,
- Figur 16: eine perspektivische Ansicht eines doppelkeilförmigen Heizkörpers analog Figur 15, jedoch mit Gasbeheizung und flächig angeordneten Gasaustrittsöffnungen,
- Figur 17: eine perspektivische Ansicht eines als Heizdüse mit Düsenspalt ausgebildeten Heizkörpers mit Austritt des Heizgases in Transportrichtung des Schlauchs gemäß Figur 11,
- Figur 18: eine perspektivische Ansicht eines als Heizdüse mit Düsenspalt ausgebildeten Heizkörpers mit Austritt des Heizgases entgegen der Transportrichtung des Schlauches,
- Figur 19: eine perspektivische Ansicht einer zweiten Variante der Verfahrensführung zur Herstellung eines Schlauchs aus zwei unterschiedlich breiten Faserstreifen mit Bildung zweier Randnähte durch ein Schmelzverfahren ohne Zusatzwerkstoff mit obenliegenden Rändern des schmäleren Faserstreifens,
- Figur 20: eine perspektivische Darstellung einer dritten Variante der Verfahrensführung zur Herstellung eines Schlauchs aus zwei unterschiedlich bereiten Faserstreifen mit Bildung zweier Randnähte durch ein Schmelzverfahren ohne Zusatzwerkstoff, mit unterliegenden Rändern des schmäleren Faserstreifens,
- Figur 21: einen Querschnitt durch einen imprägnierfähigen Schlauch mit einem inneren Folienschlauch, zwei Innenlagen aus Faserstreifen und einer Außenfolie mit jeweils zwei parallelen Verbindungsstellen in den verschiedenen Überlappungsbereichen und
- Figur 22: einen bevorzugten Einsatzfall für einen Schlauch mit einem Querschnitt analog Figur 21.

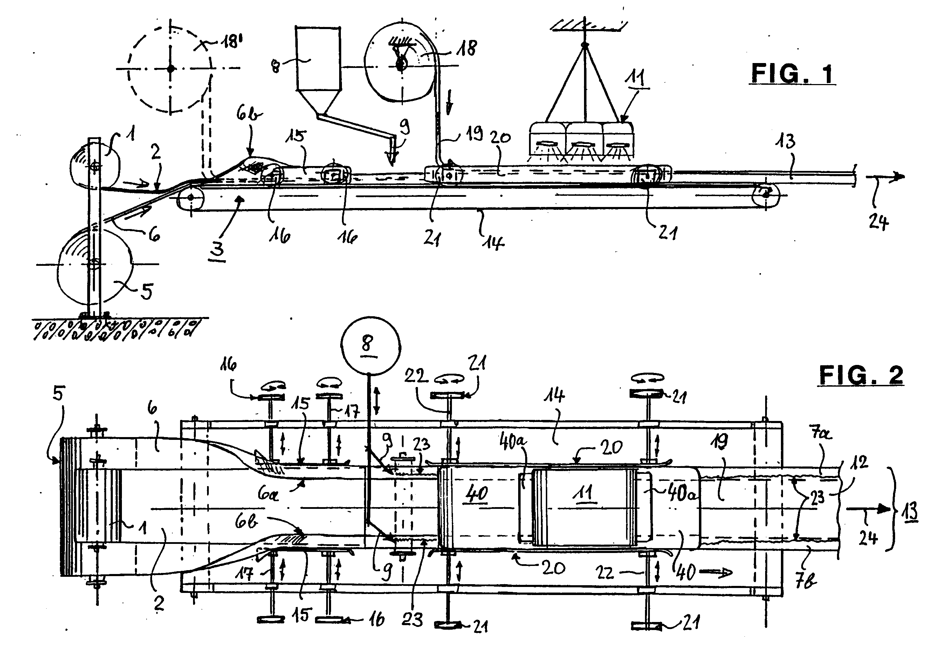

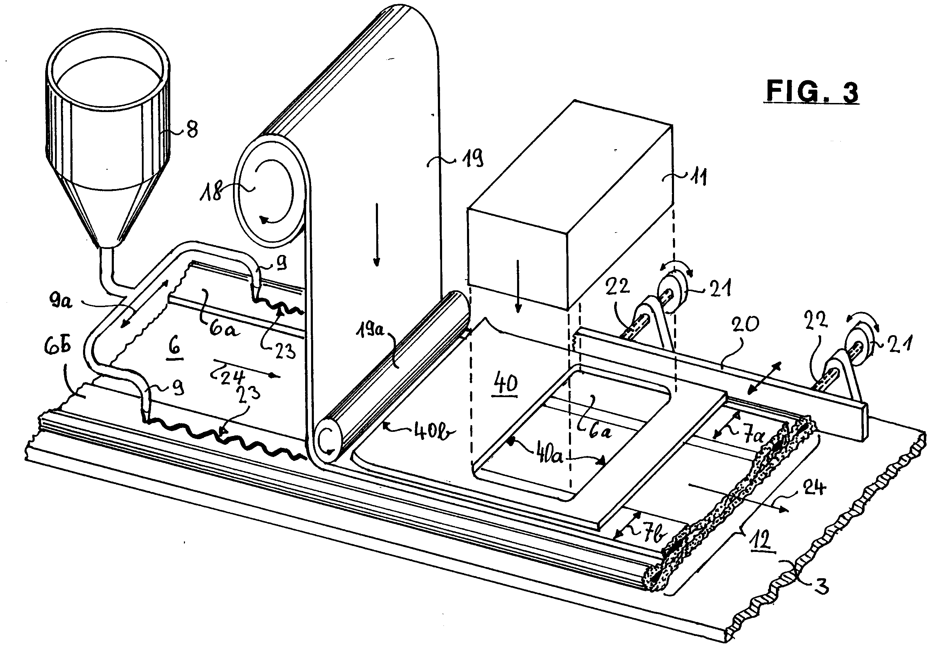

In den Figuren 1 und 2 ist eine erste Vorratsrolle 1 mit einem Innenschlauch 2 aus einer transparenten Folie gezeigt, die mit oder ohne Naht ausgeführt sein kann und gegenüber aushärtbaren Harzen undurchlässig und beständig ist. Dieser Innenschlauch 2 wird in flachliegendem Zustand einer Ablage 3 zugeführt, die als kontinuierlich laufendes Förderband 14 ausgeführt ist. Die Dickenverhältnisse sind nicht maßstäblich.

Synchron hierzu wird von einer zweiten Vorratsrolle 5 ein erster Faserstreifen 6 aus einem mit einen aushärtbaren Harz imprägnierbaren und in Umfangsrichtung dehnbaren Faserwerkstoff abgezogen. Die beiden Ränder 6a und 6b werden um den Innenschlauch 2 herumgelegt und bilden dabei zwei Überlappungsbereiche 7a und 7b. In diese wird aus einem Vorratsbehälter 8 mittels einer Dosierpumpe und zweier Düsen 9 ein reaktionsfähiges Harz eingebracht, das aus dem gleichen Harz bestehen kann, das später zur Imprägnierung verwendet wird. Der Harzeintrag kann dabei kontinuierlich, changierend oder intermittierend erfolgen. Das Harz wird in Form von sogenannten Harzspuren 23 in jeweils einer Breite aufgetragen, die geringer ist als die Breite der Überlappungsbereiche 7a und 7b und dringt teilweise in den Faserwerkstoff ein, was in Figur 3 durch Schwärzung angedeutet ist.

Die Figuren 1 und 2 zeigen eine waagrechte Verfahrensführung und eine hierfür besonders geeignete Vorrichtung, die einen geringen Raumbedarf hat und vor allem auch auf unterschiedliche Schlauchdurchmesser und unterschiedliche Raumlagen der Überlappungsbereiche 7a und 7b einstellbar ist.

Auf der waagrechten Ablage 3, die als Förderband 14 ausgebildet ist, wird von unten her zunächst der erste Faserstreifen 6 abgelegt, der von der Vorratsrolle 5 kommt und dessen Breite größer ist, als der halbe Umfang bzw. die Breite des flachliegenden Innenschlauches 2. Durch Gleitschienen 15, deren Abstand und relative Raumlage zur Ablage 3 durch Handräder 16 und Gewindespindeln 17 unabhängig voneinander verstellbar ist, werden die Ränder 6a und 6b um den Innenschlauch 2 herum einwärts gefaltet. Die Gleitschienen sind an ihren Einlaufenden trichterförmig erweitert. Es versteht sich, daß ein Innenschlauch 2 nicht zwingend erforderlich ist, so daß der Faserstreifen 6 auf der Ablage 3 abgelegt und über dieser mit seinen Rändern 6a, 6b einwärts gefaltet werden kann, so das Fasermaterial auf Fasermaterial aufliegt.

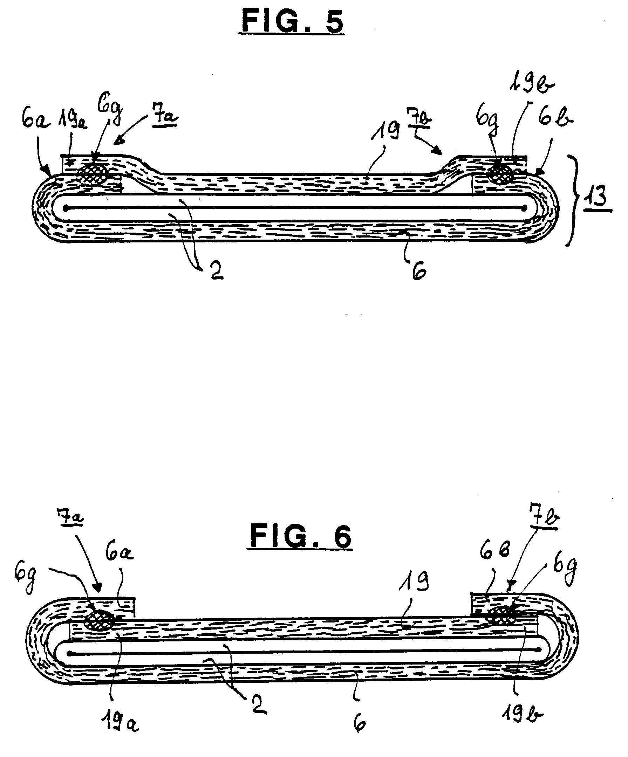

Der Harzauftrag erfolgt aus dem Vorratsbehälter 8 mittels der beiden Düsen 9 auf die bereits beschriebene Weise auf die Oberseite der Ränder 6a und 6b. Von einer weiteren Vorratsrolle 18, die in Figur 2 weggelassen ist, wird synchron ein zweiter Faserstreifen 19 abgezogen, dessen Breite maximal dem halben Umfang bzw. der Breite des Innenschlauches 2 entspricht, und mit seinen beiden Rändern von oben auf die mit dem Harz beschichteten Ränder 6a und 6b des ersten Faserstreifens 6 aufgelegt, wodurch sich eine Anordnung nach Figur 5 ergibt.

Die Führung erfolgt auch hier durch weitere Gleitschienen 20, deren Abstand voneinander und deren Raumlage zur Ablage 3 unabhängig voneinander durch Handräder 21 und Gewindespindeln 22 einstellbar ist. Zwischen den Gleitschienen 20 und über dem zweiten Faserstreifen 19 befinden sich eine "schwimmende" Andruckplatte 40 mit einem Fenster 40a, über dem ein Härtungsstrahler 11 angeordnet ist, der die beiden Harzspuren 23 durch den ersten Faserstreifen 6 hindurch aushärtet. Die Andruckplatte 40, die vertikal lose, aber in horizontalen Richtungen arretiert ist, hat den Zweck, eine zuverlässige Benetzung der Ränder der Faserstreifen 6 und 19 zu erreichen, so daß eine auf dem Umfang geschlossene Innenlage 12 entsteht, die zusammen mit dem Innenschlauch 2 einen Verbund 13 bildet, der in Richtung des Pfeils 24 mittels des Förderbandes 14 kontinuierlich transportierbar ist.

Zur Erzeugung mehrerer Innenlagen 12 ergibt sich auch hierbei die Möglichkeit, den Verbund 13 nach entsprechender Neu-Justierung nochmals oder mehrmals durch die gleiche Vorrichtung laufen zu lassen oder der Vorrichtung nach den Figuren 1 und 2 mindestens eine weitere analoge Vorrichtung nachzuschalten, die schon entsprechend eingestellt ist.

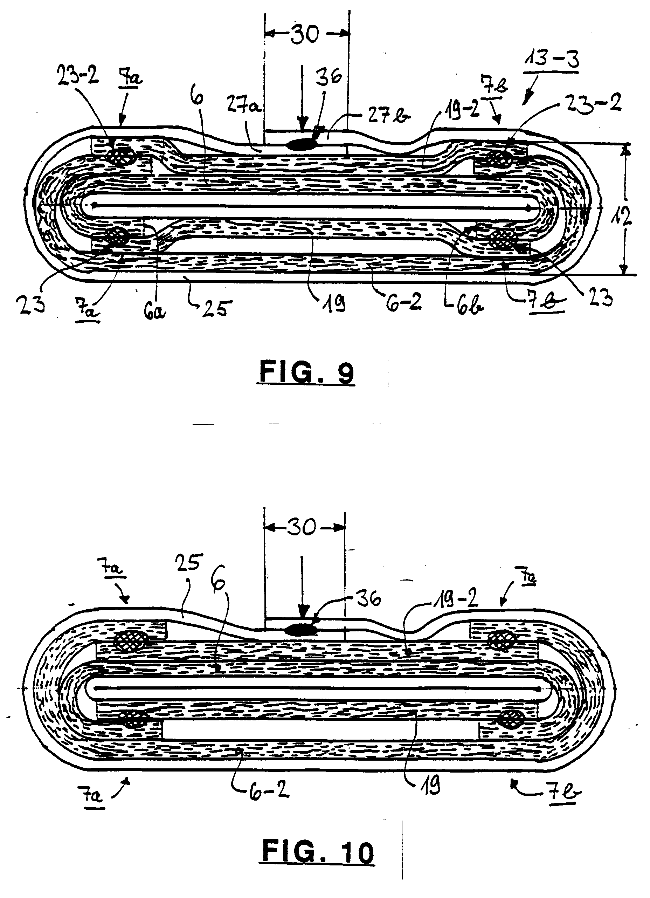

Es ist dabei möglich, aber nur in Ausnahmefällen erforderlich, daß der bereits vorhandene Verbund 13 aus dem Innenschlauch 2 und mindestens einer der zuvor aufgebrachten Innenlagen 12 vor dem Aufbringen der jeweils nächsten Innenlage um 180 Grad gewendet wird, also beispielsweise in die in Figur 9 gezeigte Über-Kopf-Lage. Nachfolgend wird ein zweiter breiterer Faserstreifen 6-2 unter den Verbund 13 auf die Ablage 3 aufgebracht und nach den Aufbringen zweier weiterer Harzspuren 23-2 von oben mit einem weiteren schmäleren Faserstreifen 19-2 abgedeckt und ausgehärtet, bis das Gebilde nach Figur 9 entstanden ist, das einen neuen Verbund 13-2 darstellt, wobei die Raumlage der Harzspuren 23 und 23-2 auf dem Umfang versetzt ist, was Figur 9 sehr deutlich zeigt. Die einzelnen Wandstärken sind übertrieben dargestellt.

Figur 3 zeigt anhand einer perspektivischen Darstellung in vergrößertem Maßstab die wesentlichen Elemente aus den Figuren 1 und 2 mit Zufuhr von Harz in Form der Harzspuren 23 durch die Düsen 9 auf die bereits herumgefalteten Ränder 6a und 6b des breiteren Faserstreifens 6 vor dem Aufbringen des schmäleren Faserstreifens 19. Dieses Aufbringen erfolgt über eine Umlenkwalze 19a. Die Wellenform der Harzspuren 23 deutet eine changierende Bewegung der Düsen 9 in Richtung des Doppelpfeils 9a an. Die Vorratsrolle 5 ist ebenso weggelassen wie die beiden Gleitschienen 15 und die vordere der Gleitschienen 20. Die Ablage 3 ist vereinfacht als Arbeitstisch dargestellt. Gut erkennbar ist die Belastung der Ränder 6a und 6b in den Überlappungsbereichen 7a und 7b durch die "schwimmende" Andruckplatte 40 mit dem Fenster 40a für den Durchtritt der UV-Strahlung des Härtungsstrahlers 11 und mit der nach oben gekrümmten Einlaufkante 40b.

Das sich daraus ergebende Zwischenprodukt, die Innenlage 12, ist in Figur 5 im Schnitt dargestellt, dort allerdings ergänzt durch den Innenschlauch 2, der in Figur 3 weggelassen wurde und auch nicht für jeden Zweck erforderlich ist.

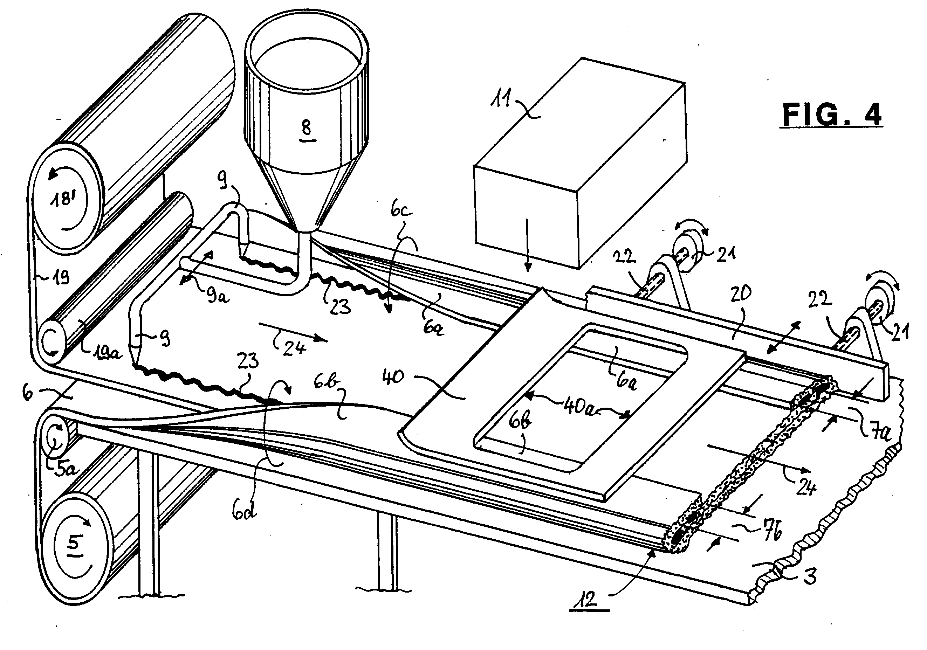

Figur 4 zeigt in analoger perspektivischer Darstellung wie Figur 3 die wesentlichen Elemente aus den Figuren 1 und 2 mit Zufuhr von Harz auf die nicht näher bezifferten Ränder des flachliegenden, schmäleren Faserstreifens 19 vor dem Herumfalten der Ränder 6a und 6b des breiteren Faserstreifens 6. In Figur 4 ist die Darstellung nach links verlängert und auch der Einlaufbereich der Ablage 3 in Verbindung mit der Vorratsrolle 5 und einer weiteren Umlenkwalze 5a gezeigt. Sehr deutlich ist der Vorgang des Herumfaltens der Ränder 6a und 6b des breiteren Faserstreifens 6 um die Ränder des schmäleren Faserstreifens 19 gezeigt, und zwar werden gewissermaßen die Ränder 6a und 6b in Richtung der Pfeile 6c und 6d kontinuierlich auf die Harzspuren 23 heruntergeklappt. Der Vorgang des Herumfaltens erfolgt in Figur 3 links außerhalb der Zeichnung. Die hierfür benötigten Gleitschienen 15 mit ihren trichterförmigen Einlaufenden (Figuren 1 und 2) sind auch in Figur 4 der Übersichtlichkeit halber weggelassen. Die Vorratsrolle 18 wurde zu diesem Zweck mit der Umlenkwalze 19a nach links in die in Figur 1 gestrichelt dargestellt Position 18' versetzt, und zwar, in Einlaufrichtung der Faserstreifen 6 und 19 gesehen, vor die Düsen 9.

Das sich daraus ergebende Zwischenprodukt, die Innenlage 12, ist in Figur 6 im Schnitt dargestellt, dort allerdings ergänzt durch den Innenschlauch 2, der in Figur 4 weggelassen wurde und auch nicht für jeden Zweck erforderlich ist.

Es ist dabei besonders vorteilhaft, wenn bei Verwendung eines Innenschlauchs 2 dieser mit der unmittelbar anliegenden Oberfläche des betreffenden Faserstreifens 6, 19 fest verbunden ist, beispielsweise durch Verkleben oder Verschweißen. Es handelt sich dabei um ein Vorfabrikat, das in diesem Zustand eingesetzt wird. In diesem Falle verbleibt der Innenschlauch 2 mit den übrigen Komponenten des ausgehärteten Schlauchs in der entsprechenden Rohrleitung und braucht nicht herausgezogen zu werden. Dies hat den beträchtlichen Vorteil, daß der Sanierungsschlauch wegen seiner besonderen Dichtheit auch für Druckwasser und insbesondere für Trinkwasser verwendet erden kann. Im letzten Falle gehen nämlich keine Harzkomponenten, Lösungsmittel, Härter, Beschleuniger oder dergleichen oder andere Harzausdünstungen in das Trinkwasser über.

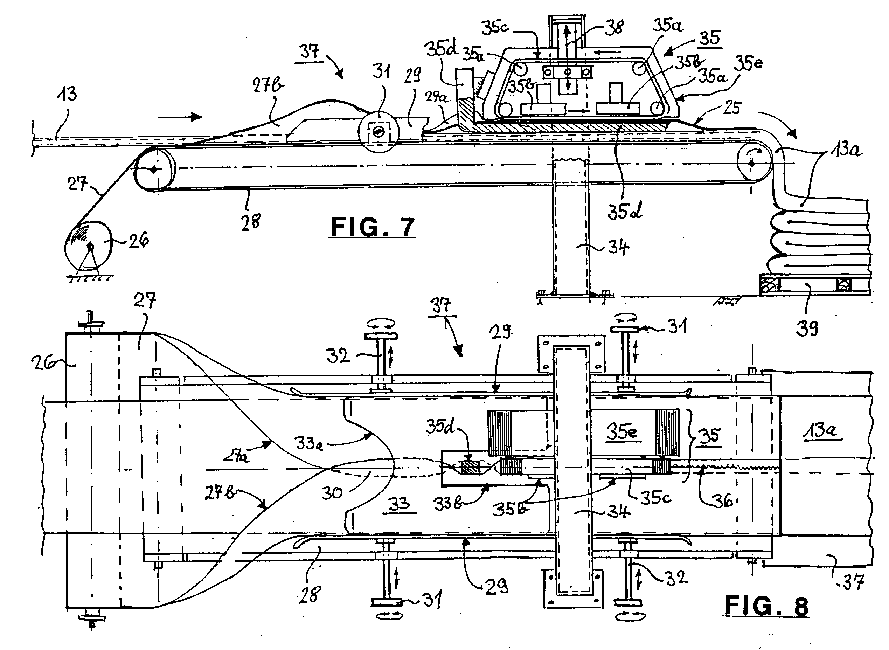

Die Figuren 7 und 8 zeigen, auf welche Weise die Zwischenprodukte nach den Figuren 5 und 6 in einer Einhüllvorrichtung 37 mit einer Außenfolie 25 ummantelt werden können.

Der jeweilige Verbund 13 wird - entweder von einer vorausgehenden Vorrichtung oder von einer nicht gezeigten Zwischenlagerrolle - von links zugeführt. Synchron wird von unten her von einer Vorratsrolle 26 ein zunächst flachliegendes Folienband 27 aus einer gegen das Harz undurchlässigen und beständigen Folie unter dem Verbund 13 auf einem Förderband 28 abgelegt. Das Folienband hat eine Breite, die größer ist als der Umfang bzw. die doppelte Breite des Verbundes 13, und seine Ränder 27a und 27b werden durch eine Faltvorrichtung bzw. Führungsschienen 29 um den Verbund 13 herumgefaltet und flachgelegt, wobei sich ein Überlappungsbereich 30 bildet. Auch die Führungsschienen 29 können durch Handräder 31 und Gewindespindeln 32 gegeneinander und/oder in gleicher Richtung über dem Förderband 28 verstellt werden.

Auf dem Folienband "schwimmt" - in waagrechter Richtung festgehalten - eine Andruckplatte 33 mit zwei mittigen Ausnehmungen 33a und 33b. Die Andruckplatte 33 verfolgt den Zweck einer faltenfreien Umhüllung der jeweils letzten Innenlage 12 und der Niederhaltung des Überlappungsbereichs 30.

Jenseits der Andruckplatte 33 befindet sich ein Portal 34 mit einer Schweißvorrichtung 35 mit vier Umlenkrollen 35a, über die ein Schweißband 35c geführt ist, das zwei Heizstationen 35b durchläuft und eine Schweißnaht 36 erzeugt (in Figur 9 geschwärzt dargestellt). Vor dem Portal 34 und innerhalb der Ausnehmung 33b wird der Überlappungsbereich 30 auf einer kurzen Wegstrecke wieder aufgefaltet, um einen Schweißschuh 35d durchzulassen, der sich nach rechts unterhalb des Schweißbandes 35c erstreckt und über dem der Überlappungsbereich 30 vor einem nicht sichtbaren Niederhalter wieder geschlossen ist. Der Schweißschuh 35d dient als Widerlager für das Schweißband 35c und den Überlappungsbereich 30 der Außenfolie 25. Die Antriebsteile sind in einem Gehäuse 35e untergebracht. Eine derartige Schweißvorrichtung ist im Handel erhältlich und wird daher nicht weiter beschrieben; sie ist in Richtung des Doppelpfeils 38 in der Höhe verstellbar.

Ein endgültiger Verbund 13a ist auf diese Weise fertiggestellt und wird auf einer Palette 39 zum Abtransport abgelegt.

Es wird betont, daß die Innenlage 12 hierbei immer noch "trocken", d.h. - mit Ausnahme der Harzspuren 23 und 23-2 - nicht mit dem aushärtbaren Harz imprägniert ist und einer hier nicht gezeigten Imprägniervorrichtung zugeführt werden muß, was entweder unmittelbar anschließend, nach einer Zwischenlagerung oder auf einer Baustelle durchgeführt werden kann.

Ein hierfür gut geeignetes Verfahren und eine Vorrichtung sind in der DE 196 37 795 A1 der gleichen Anmelderin beschrieben. Hierbei wird ein kompletter Schlauch, bestehend aus Innenschlauch, Faser-Innenlage und Außenschlauch, durch einen Walzenspalt geführt, und in sein offenes Ende wird das noch flüssige Harz zwischen dem Innenschlauch und dem Außenschlauch mit der Faser-Innenlage eindosiert und über dem Walzenspalt angestaut. Der Schlauch wird vor dem Walzenspalt evakuiert und hinter dem Walzenspalt durch Quetschwalzen abgezogen, wodurch sich ein Endprodukt mit einer einwandfreien und vollständigen Imprägnierung ergibt.

Figur 10 zeigt ein vorläufiges Endprodukt, das in der umgekehrten Reihenfolge wie das Produkt nach Figur 5 hergestellt worden ist. Zu diesem Zweck wurde in den Figuren 1 und 4 die Vorratsrolle 18 in die Position 18' vorverlagert. Es wird also der schmälere Faserstreifen 19 zuerst auf den flachliegenden Innenschlauch 2 oder die Ablage 3 aufgelegt, und danach werden die Ränder 6a und 6b des breiteren Faserstreifens 6 über die Ränder 19a und 19b des schmaleren Faserstreifens 19 herumgefaltet. Zum Aufbringen einer weiteren Innenlage wurde zunächst der Verbund nach Figur 6 um 180 Grad gewendet, und dann wurden zwei weitere Faserstreifen 19-2 und 6-2 in analoger Weise aufgebracht wie in Figur 9. Das Zwischenprodukt wurde dann wieder in eine Vorrichtung nach den Figuren 7 und 8 eingeführt und mit der Außenfolie 25 umgeben, wodurch das "trockene" vorläufige Endprodukt nach Figur 10 erhalten wurde.

Auch in den folgenden Figuren werden gleiche Teile oder Teile mit gleichen Funktionen mit den bisherigen Bezugszeichen versehen.

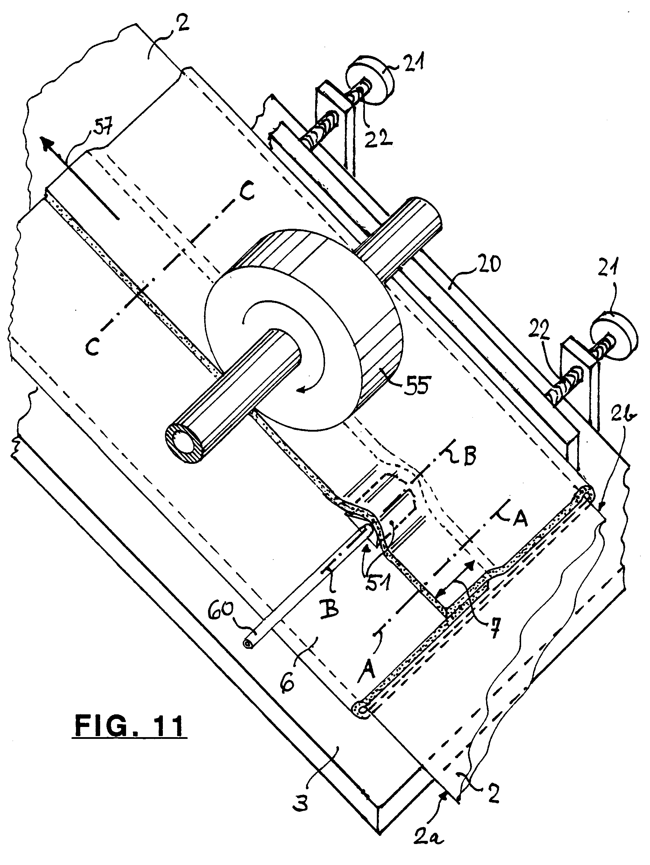

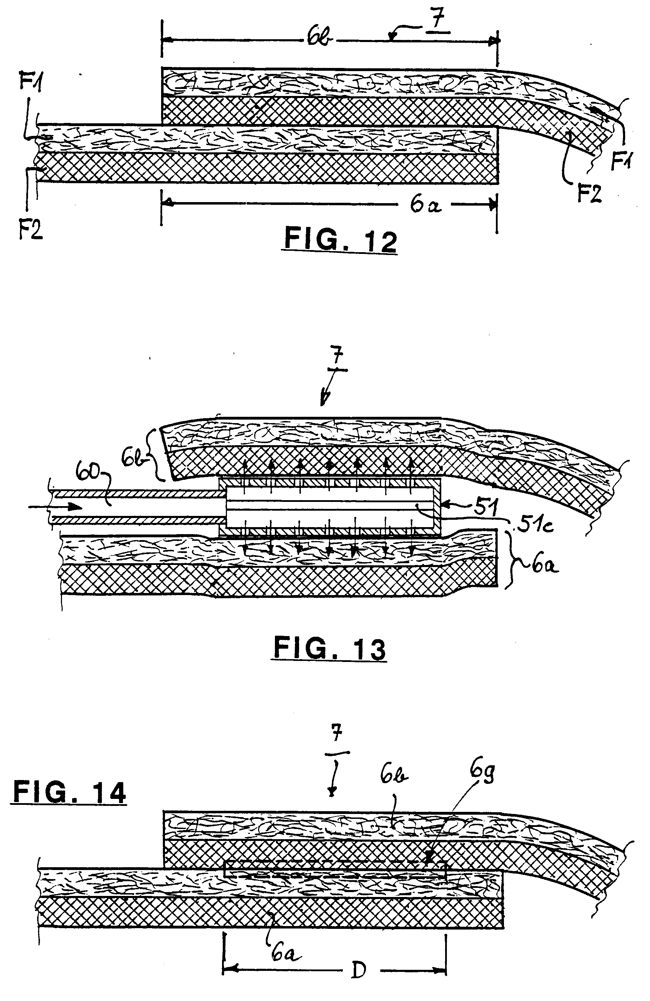

In Figur 11 ist ein Ausschnitt aus einer Ablage 3 dargestellt, die als Arbeitstisch ausgebildet ist. Diesem wird von einer nicht gezeigten Vorratsrolle ein flachliegender Innenschlauch 2 aus einer Folie zugeführt, der jedoch für die Erfindung nicht wesentlich ist. Von einer weiteren, nicht gezeigten Vorratsrolle wird ein - zunächst und außerhalb des Zeichnungsfeldes flachliegender Faserstreifen 6 zugeführt, der um die beiden Längskanten 2a und 2b des Innenschlauchs 2 herumgefaltet wird. Dessen Breite ist so bemessen, daß in etwa in der Mitte ein Überlappungsbereich 7 aus den beiden Rändern 6a und 6b (Figur 12) des Faserstreifens gebildet wird. Zwischen diesen beiden Rändern 6a und 6b befindet sich ein Heizkörper 51, der über eine Leitung 60 mit einem Heizgas versorgt wird. Die damit verbundene Wirkung wird anhand der Figuren 12 bis 14 noch näher erläutert. Der unter dem Folienschlauch 2 befindliche Teilumfang des Faserstreifens 6 ist gestrichelt dargestellt, obwohl er durch den Folienschlauch 2 hindurch sichtbar ist.

In Transportrichtung (Pfeil 57) drückt auf den aufgeheizten Überlappungsbereich 7 eine Andruckeinrichtung 55, die als Rollkörper ausgebildet ist, der erforderlichenfalls auch gekühlt werden kann. Dadurch wird die Schmelzverbindung ihnerhalb des Überlappungsbereichs 7 verfestigt, ohne das Fasergefüge zu zerstören. Der Arbeitstisch ist auf beiden Seiten mit parallelen Gleitschienen 20 versehen, von denen nur die hintere gezeigt ist, und die durch Handräder 21 und Gewindespindeln 22 auf die Schlauchbreite eingestellt werden können.

Figur 12 zeigt den Überlappungsbereich 7 mit zunächst noch unverbundenen Rändern 6a und 6b des Faserstreifens 6 (Linie A-A in Figur 11). Der Fasersteifen 6 besteht aus zwei unterschiedlichen Faserwerkstoffen F1 und F2 mit unterschiedlichen Schmelztemperaturen TS1 und TS2. Beispielsweise kann es sich um ein Polyestervlies einerseits und ein Glasfaservlies andererseits handeln, die durch Nadeln oder Steppen untrennbar miteinander verbunden sind. In diesem Fall liegt - im Überlappungsbereich 7 - ein Polyestervlies auf einem Glasfaservlies.

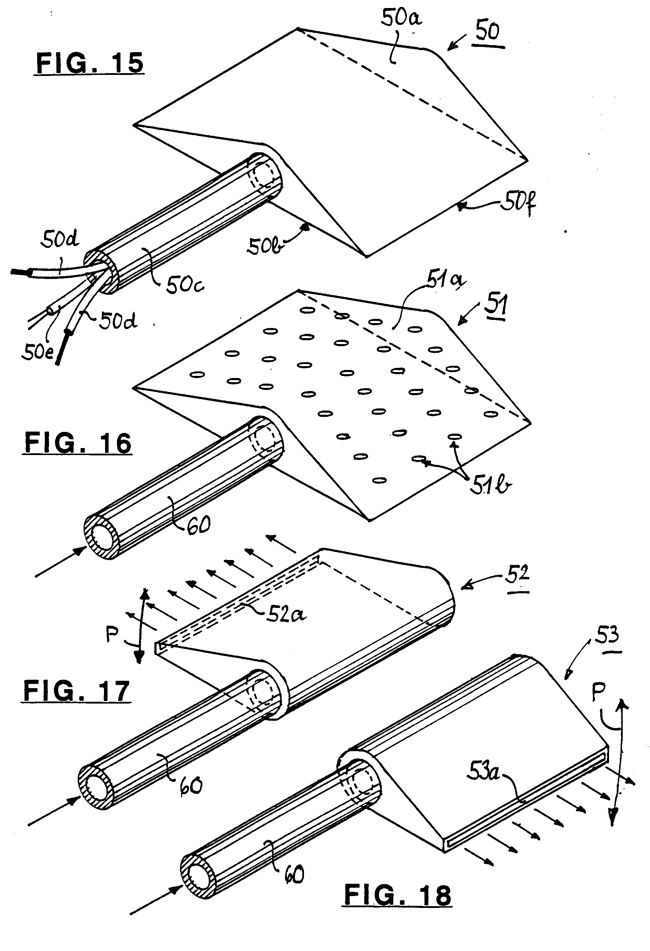

Gemäß Figur 13 läuft der Überlappungsbereich 7 beim Transport unter Spreizung nach oben (siehe Figur 11, Linie B-B) auf einen Heizkörper 51 auf, der aus einem doppel-keilförmigen Hohlkörper mit nach oben und nach unten gerichtete Gasaustrittsöffnungen 51b besteht (siehe Figur 16, nach oben gerichtet). Über die Länge des Heizkörpers 51 erstreckt sich noch ein Gasaustrittsspalt 51c, der dem Heizkörper die Wirkung einer Flachdüse verleiht. Es versteht sich, daß die Gasaustrittsöffnungen 51b nach oben und nach unten und der Gasaustrittsspalt 51c nicht gemeinsam vorhanden sein müssen und selektiv bzw. alternativ angewandt werden können, je nach dem, in welche Richtung der größere Teil der Heizenergie gerichtet werden soll. Die einzelnen Gasströme, die in die Tiefe der Faserwerkstoffe führen, sind durch Pfeile angedeutet.

Figur 14 zeigt den Überlappungsbereich 7 nach Vereinigung der beiden Ränder 6a und 6b jenseits der Andruckeinrichtung 55 (des Rollkörpers) an der Linie C-C in Figur 11. Die Verbindungsstelle 6g ist durch ein gestricheltes Rechteck angedeutet, das jedoch nicht notwendigerweise maßstäblich ist. In Wirklichkeit ist dieser Verbindungsbereich sehr dünn bzw. flach und beschränkt sich auf die unmittelbar aufeinanderliegenden Oberflächenbereiche der Ränder 6a und 6b innerhalb des Überlappungsbereichs 7. Die Breite "D" der Verbindungsstelle 6g ist schmäler als der Überlappungsbereich 7. Diese Verbindungsstellen 6g können auch als "Schmelzspuren" bezeichnet werden.

Figur 15 zeigt einen Heizkörper 50 in Doppelkeilform, dessen Oberseite 50a dachförmig und dessen Unterseite 50b eben ausgebildet ist. Durch ein Halterohr 50c sind Stromleitungen 50d und eine Meßleitung 50e für ein im Innern des Heizkörpers 50 angeordnetes Thermoelement hindurchgeführt, das mit einem Regler verbunden ist. In diesem Falle handelt es sich um eine reine Kontaktbeheizung. Mindestens die Auflaufkante 50f kann auch abgerundet ausgebildet sein.

In den folgenden Figuren sind Gas- bzw. Luftheizungen dargestellt.

Figur 16 zeigt den bereits im Zusammenhang mit Figur 11 erörterten doppelkeilförmigen Heizkörper 51 analog Figur 15 mit flächig in einem Rastermaß in seiner Oberseite 50a angeordneten Gasaustrittsöffnungen 51b.

Figur 17 zeigt einen als Heizdüse mit einem Düsenspalt 52a ausgebildeten Heizkörper 52 mit Austritt des Heizgases (Pfeile) in Transportrichtung des Schlauches.

Figur 18 zeigt einen als Heizdüse mit einem Düsenspalt 53a ausgebildeten Heizkörper 53 mit Austritt des Heizgases (Pfeile) entgegen der Transportrichtung des Schlauches (Pfeile).

Die Symmetrieebenen der Düsenspalte 52a bzw. 53a können dabei gegenüber jeweils einer zur Berührungsfläche der Ränder 6a, 6b parallelen Ebene nach oben oder unten in Richtung der Doppelpfeile "P" schwenkbar sein, um die Energieverteilung zu beeinflussen. Dadurch ist es beispielsweise möglich, die Faserstreifenoberfläche mit dem größeren Anteil an Polymerfasern stärker zu beheizen als die Faserstreifenoberfläche mit dem größeren Anteil an Mineralfasern.

Die Heizkörper 51, 52 und 53 nehmen durch die Gastemperatur auch eine entsprechende Oberflächentemperatur an, so daß hier im Überlappungsbereich 7 die Gasbeheizung mit einer Kontaktheizung einhergeht. Es hat sich überraschend gezeigt, daß in keinem der Fälle eine Verklebung zwischen Heizkörper und Fasermaterial eintritt. Gegebenenfalls können auch thermisch isolierte Abstandshalter zwischen mindestens einem der Faserstreifen und mindesten einem der Heizkörperflächen vorgesehen werden.

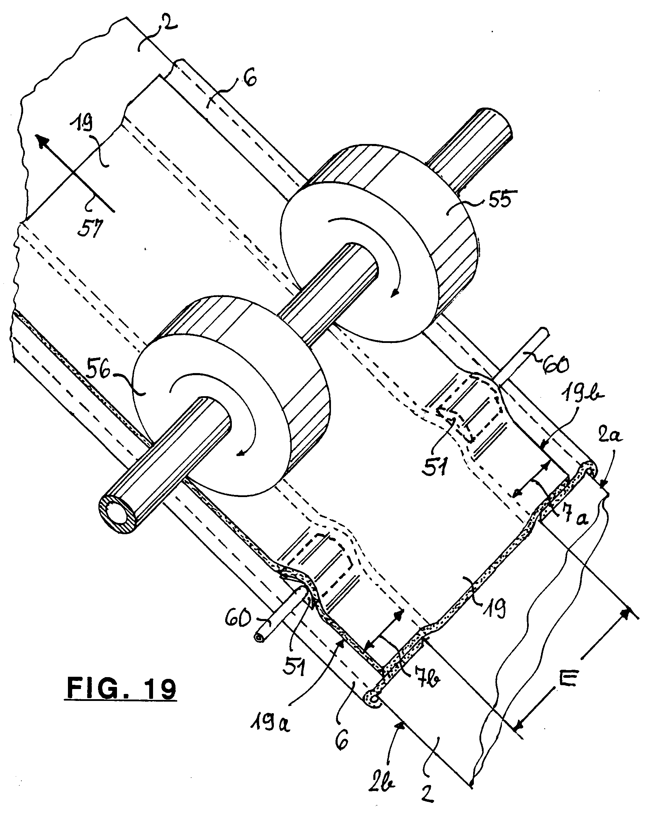

Figur 19 erläutert eine weitere Variante der Verfahrensführung zur Herstellung eines Schlauches aus zwei unterschiedlich breiten Faserstreifen 6 und 19 unter Bildung zweier Überlappungsbereiche 7a und 7b mit obenliegenden Rändern des schmäleren Faserstreifens 19. Die Ränder 6a und 6b des breiteren Faserstreifens 6 werden zunächst analog zu den Figuren 1 und 2 um den Folienschlauch 2 herumgefaltet, lassen hierbei jedoch einen breiten Abstand "E" zwischen den nach innen gerichteten Schnittkanten 6e, 6f des breiteren Faserstreifens 6. Die oben und frei liegenden Schnittkanten 19b und 19c des schmaleren Faserstreifens 19 sind nach außen gerichtet, so daß die beiden Heizkörper 51 von den Außenseiten her in die Überlappungsbereiche 7a und 7b eingeführt sind. In diesem Fall sind entsprechend der Raumlage der Überlappungsbereiche 7a und 7b bzw. der beiden Heizkörper 51 diesen zwei rollen- oder walzenförmige Andruckeinrichtungen 55 und 56 nachgeschaltet.

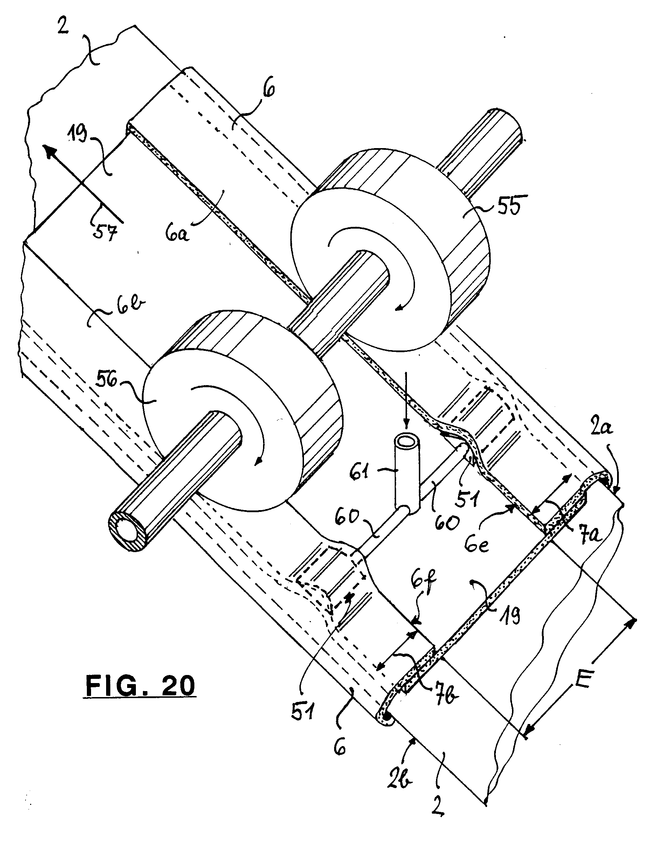

Figur 20 erläutert eine weitere Variante der Verfahrensführung zur Herstellung eines Schlauches aus zwei unterschiedlich breiten Faserstreifen 6 und 19 unter Bildung zweier Überlappungsbereiche 7a und 7b mit untenliegenden Rändern des schmäleren Faserstreifens 19. In diesem Falle wird zunächst der schmälere Faserstreifen 19 auf den Folienschlauch 2 aufgelegt und der breitere Faserstreifen 6 wird nachfolgend um den Folienschlauch 2 und den schmaleren Faserstreifen 19 herumgefaltet, läßt hierbei jedoch gleichfalls einen breiten Abstand "E" zwischen den nach innen gerichteten Schnittkanten 6e und 6f des breiteren Faserstreifens 6. Die oben und frei liegenden Schnittkanten 6e und 6f des breiteren Faserstreifens 6 sind nach innen gerichtet, so daß die beiden Heizkörper 51 von den Innenseiten her in die Überlappungsbereiche 7a und 7b eingeführt sind. Dies schafft den Vorteil, daß die beiden Heizkörper 51 über eine zentrale Versorgungsleitung 61 mit Heißluft versorgt werden können. Ansonsten ändert sich nichts Prinzipielles an der Verfahrensführung.

Die Verfahrensführung nach Figur 11 einerseits und den Figuren 19 oder 20 andererseits können miteinander kombiniert werden, um z.B. mehrere Schläuche konzentrisch anordnen zu können, ohne daß sich die Überlappungsbereiche 7, 7a und 7b überdecken und so zu einer unerwünschten örtlichen und additiven Verdickung führen würden.

Es versteht sich, daß Maßnahmen und Konstruktionen nach den Figuren 1 bis 4 einerseits und nach den Figuren 11, 19 und 2o andererseits auch gegeneinander ausgetauscht werden können. So können in den Figuren 1 bis 4 die Harzdüsen 9 und die Härtungsstrahler 11 gegen Heizkörper 50 bis 53 und Andruckeinrichtungen 55, 56 ausgetauscht werden, und in den Figuren 11, 19 und 20 können umgekehrt die Heizkörper 50 bis 53 und die Andruckeinrichtungen 55 und 56 auch gegen Harzdüsen 9 und Härtungsstrahler 11 ausgetauscht werden. Ferner kann den Vorrichtungen nach den Figuren 11, 19 und 20 eine Umhüllungsvorrichtung 37 für eine Schlauchfolie 25 nach den Figuren 7 und 8 nachgeschaltet werden, so daß sich wiederum die Produkte nach den Figuren 9 und 10 ergeben.

Die Verstellbarkeit der Gleitschienen 15 und 20 dient nicht nur zur Anpassung an unterschiedliche Breiten des flachliegenden Schlauches, sondern auch zu dessen Querverschiebung gegenüber den Vorratsrollen 5, 18 und 18'. Zur Querverschiebung können alternativ auch die Vorratsrollen 5 und 18 bzw. 18' einzeln, gemeinsam oder auch entgegengesetzt in Querrichtung gegenüber der Ablage 3 verschiebbar angeordnet sein oder es können Vorratsrollen mit noch breiteren oder schmäleren Faserstreifen eingesetzt werden. In diesem Fall können für den Aufbau einer mehrschichtigen Innenlage 12 auch weitere Faserstreifen zugeführt werden, ohne daß nach dem Herstellen des ersten Verbundes 13 ein Wenden erforderlich würde.

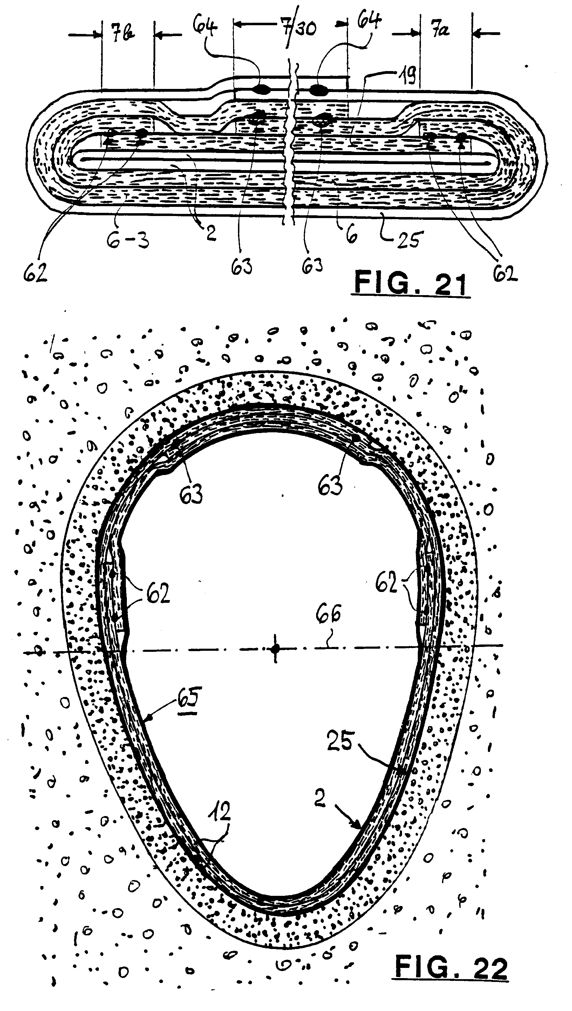

Die Figur 21 zeigt eine solche Einsatzmöglichkeit: Die Faserstreifen 6 und 19 wurden analog dem Verfahren entweder auf einer Vorrichtung nach den Figuren 1 und 2 oder nach Figur 20 verarbeitet, das zu einem Zwischenprodukt nach Figur 5 geführt hat, allerdings bereits mit dem Unterschied, daß in den beiden seitlichen Überlappungsbereichen 7a und 7b jeweils zwei parallele Verbindungsstellen (Harz- oder Schmelzspuren) 62 angelegt wurden. Ein solcher Verbund kann alsdann ohne Wenden anstelle des Innenschlauchs 2 in eine Vorrichtung analog den Figuren 7, 8 oder 11 eingeführt werden. Lediglich der Faserstreifen 6 ist dann durch einen Faserstreifen 6-3 zu ersetzen, dessen Bereite mehr als doppelt so groß ist als die Breite des flachliegenden Verbundes, so daß ein einziger breiter Überlappungsbereich 7 gebildet wird, der gleichfalls durch zwei Verbindungsstellen 63 zusammengehalten wird.

Die Vorrichtung und Materialführung sehen dann in etwa so aus wie die linken Hälften der Figuren 7 und 8. Lediglich an die Stelle der Folie und der Schweißvorrichtung 35 treten dann wieder der Faserstreifen 6-3, ein Vorratsbehälter 8 mit zwei Harzdüsen 9 und einem Härtungsstrahler 11, die in diesem Fall über dem mittleren Überlappungsbereich 7 angeordnet sind.

Alternativ kann die Verbindungstechnologie nach den Figuren 11 bis 20 angewandt werden. Es ist deutlich zu erkennen, daß die Überlappungsbereiche 7, 7a und 7b mit den Verbindungsstellen (Harz- oder Schmelzspuren) 62 und 63 auf dem Umfang versetzt zueinander angeordnet sind, so daß keine Dickenanhäufungen auftreten. Das Zwischenprodukt nach Figur 21, wiederum ein Verbund, kann dann nach einer der bereits beschriebenen Methoden weiterverarbeitet werden, beispielsweise in Vorrichtungen nach den Figuren 7 und 8. In diesen wird die Schlauchfolie 25 mit einem Überlappungsbereich 30 und zwei Schweißnähten 64 aufgebracht.

Figur 22 zeigt nun einen Querschnitt durch einen Abwasserkanal mit Ei-Form mit einem Sanierungsschlauch 65, der im flachliegendem Zustand sehr weitgehend der Figur 21 entspricht. Eine Faltlinie 66 des Querschnitts ist strichpunktiert dargestellt, und es ist darauf zu achten, daß auf dieser Faltlinie keine Verbindungsstellen (Harz- oder Schmelzspuren) und nach Möglichkeit auch keine Überlappungsbereiche 7, 7a, 7b, 30 liegen.

Folgende Werkstoffe und Abmessungen kommen infrage:
Innenschlauch 2 und Außenfolie 25:
   Polyester, Polyethylen, Polypropylen, Polyamid und Laminate daraus.
Dicke für den Innenschlauch 2 : 0,100 bis 0,200 mm
Dicke für die Außenfolie 25 : 0,150 bis 0,300 mm
Dehnbarkeit/Streckgrenze bis 30 %.

Faserstreifen 6, 6-2, 6-3, 19, 19-2
Vliese, Gewebe, Rovings, und Schnitzel daraus,
Faser aus Polyester, Polyethylen, Polypropylen, Acryl, Polyamid, Glas, auch im Gemisch und mit Einlagen aus Fäden,
Dicke: 1,0 bis 8,0 mm, vorzugsweise 2,0 bis 4,0 mm, pro Innenlage
Dehnbarkeit/Streckgrenze:
   in Umfangsrichtung bis 15 %.

Harze:
   Polyester-, Epoxid- und Vinylesterharze, beispielsweise "Palatal" der Firma BASF in Ludwigshafen/Deutschland mit Aktivatoren und Beschleunigern für die Aushärtung durch Ultraviolettstrahlen, kalt und warm aushärtende Harze;

Durchmesser des fertigen Schlauchs: bis über 1200 mm.

### Bezugszeichenliste:

- 1: Vorratsrolle
- 2: Innenschlauch
2a Längskante
2b Längskante
- 3: Ablage
- 5: Vorratsrolle
5a Umlenkwalze
- 6: Faserstreifen
6a Rand
6b Rand
6c Pfeil
6d Pfeil
6e Schnittkanten
6f Schnittkanten
6g Verbindungsstelle
6-2 Faserstreifen
6-3 Faserstreifen
- 7: Überlappungsbereich
7a Überlappungsbereich
7b Überlappungsbereich
- 8: Vorratsbehälter
- 9: Düsen
9a Doppelpfeil
- 11: Härtungsstrahler
- 12: Innenlage
- 13: Verbund
13-2 Verbund
- 14: Förderband
- 15: Gleitschienen
- 16: Handräder
- 17: Gewindespindeln
- 18: Vorratsrolle
18' Vorratsrolle
- 19: Faserstreifen
19a Umlenkwalze
19b Schnittkante
19c Schnittkante
19-2 Faserstreifen
- 20: Gleitschienen
- 21: Handräder
- 22: Gewindespindeln
- 23: Harzspuren
23-2 Harzspuren
- 24: Pfeil
- 25: Außenfolie
- 26: Vorratsrolle
- 27: Folienband
27a Rand
27b Rand
- 28: Förderband
- 29: Führungsschienen
- 30: Überlappungsbereich
- 31: Handräder
- 32: Gewindespindeln
- 33: Andruckplatte
33a Ausnehmung
33b Ausnehmung
- 34: Portal
- 35: Schweißvorrichtung
35a Umlenkrollen
35b Schweißstationen
35c Schweißband
35d Schweißschuh
35e Gehäuse
- 36: Schweißnaht
- 37: Einhüllvorrichtung
- 38: Doppelpfeil
- 39: Palette
- 40: Andruckplatte
40a Fenster
40b Einlaufkante
- 50: Heizkörper
50a Oberseite
50b Unterseite
50c Halterohr
50d Stromleitungen
50e Meßleitung
50f Auflaufkante
- 51: Heizkörper
51a Oberseite
51b Gasaustrittsöffnungen
51c Gasaustrittsspalt
- 52: Heizkörper
52a Düsenspalt
- 53: Heizkörper
53a Düsenspalt
- 55: Andruckeinrichtung
- 56: Andruckeinrichtung
- 57: Pfeil
- 60: Leitung
- 61: Versorgungsleitung
- 62: Verbindungsstellen
- 63: Verbindungsstellen
- 64: Schweißnähte
- 65: Sanierungsschlauch
- 66: Faltlinie

## Patentansprüche

1. Verfahren zum Herstellen eines Schlauchs für die Auskleidung von Rohrleitungen und Kanalsystemen mit mindestens einer aus einem Faserwerkstoff bestehenden, mit einem aushärtbaren Harz imprägnierbaren Innenlage (12), deren Ränder (6a, 6b) durch Aufeinanderlegen auf einen gleichen (6, 6-3) oder einen anderen Faserstreifen (19, 19-2) auf dem Umfang des Schlauchs mit mindestens einem in Längsrichtung verlaufenden, fest verbundenen Überlappungsbereich (7, 7a, 7b) versehen werden und die anschließend mit einer gegenüber dem Harz undurchlässigen Außenfolie (25) umgeben wird, **dadurch gekennzeichnet**, daß
a) für die mindestens eine Innenlage (12) ein mindestens in Umfangsrichtung des Schlauchs elastisch dehnbarer Faserwerkstoff verwendet wird, und daß
b) die Ränder (6a, 6b) der Innenlage (12) vor der Weiterverarbeitung im Überlappungsbereich (7, 7a, 7b) entweder kontinuierlich oder abschnittsweise durch einen thermischen Prozeß an Verbindungsstellen (6g, 62 63) irreversibel miteinander verbunden werden, indem entweder
b1) ein aushärtbares Harz im Überlappungsbereich (7, 7a, 7b) zwischen die Ränder (6a, 6b) eingebracht und nach dem mindestens teilweisen Eindringen in beide Ränder (6a, 6b) durch Energiestrahlung durch den Faserwerkstoff hindurch ausgehärtet wird, oder
b2) der Faserwerkstoff mindestens einer der Ränder (6a, 6b) im Überlappungsbereich (7, 7a, 7b) oberflächlich angeschmolzen wird, worauf die Ränder (6a, 6b) unter Druckanwendung miteinander verschmolzen werden.

2. Verfahren nach Anspruch 1, **dadurch gekennzeichnet**, daß als aushärtbares Harz für die Verbindung der Ränder (6a, 6b) der Innenlage (12) das gleiche Harz verwendet wird wie für die Imprägnierung des Restquerschnitts der Innenlage (12).

3. Verfahren nach Anspruch 1, **dadurch gekennzeichnet**, daß die Verbindungsstelle(n) (6g, 62, 63) in Umfangsrichtung des Schlauchs schmal ist/sind im Verhältnis zur Breite des jeweiligen Überlappungsbereichs (7, 7a, 7b).

4. Verfahren nach Anspruch 1, **dadurch gekennzeichnet**, daß in mindestens einem der Überlappungsbereiche (7, 7a, 7b) mindestens zwei Verbindungsstellen (6g, 62, 63) erzeugt werden.

5. Verfahren nach Anspruch 1, **dadurch gekennzeichnet**, daß die mindestens eine, aus Faserwerkstoff bestehende Innenlage (12) um einen gegenüber dem Harz undurchlässigen Innenschlauch (2) herumgelegt wird und daß das Harz des mindestens einen Überlappungsbereichs (7, 7a, 7b) nach dem Aufbringen durch Energiestrahlung ausgehärtet wird.

6. Verfahren nach Anspruch 1, **dadurch gekennzeichnet**, daß die mindestens eine, aus Faserwerkstoff bestehende Innenlage (12) aus zwei Faserstreifen (6, 6-2, 19, 19-2) gebildet wird, von denen der eine breiter ist als der halbe Umfang des Innenschlauchs (2) und der andere maximal die gleiche Breite hat wie der halbe Umfang des Innenschlauchs (2), daß zunächst der breitere Faserstreifen (6, 6-2) auf eine Ablage (3) gefördert und mit seinen beiden Rändern (6a, 6b) einwärts gefaltet wird, daß der schmälere Faserstreifen (19, 19-2) entweder vor oder nach der Faltung des breiteren Faserstreifens (6, 6-2) unter Herstellung zweier Überlappungsbereiche (7a, 7b) der beiden Ränder (6a, 6b) auf der gleichen Ablage (3) abgelegt wird, wobei
entweder
b1) in beiden Überlappungsbereichen (7a, 7b) ein aushärtbares Harz zwischen die Ränder (6a, 6b) eingebracht und nach dem mindestens teilweisen Eindringen in die aufeinanderliegenden Ränder (6a, 6b) durch Energiestrahlung durch den Faserwerkstoff hindurch ausgehärtet wird,
oder
b2) der Faserwerkstoff jeweils einer der Ränder (6a, 6b) in jedem Überlappungsbereich (7a, 7b) oberflächlich angeschmolzen wird, worauf die Ränder (6a, 6b) unter Druckanwendung miteinander verschmolzen werden.

7. Verfahren nach Anspruch 1, wobei der Faserwerkstoff mindestens einer der Ränder (6a, 6b) im Überlappungsbereich (7, 7a, 7b) oberflächlich angeschmolzen wird, worauf die Ränder (6a, 6b) unter Druckanwendung miteinander verschmolzen werden, **dadurch gekennzeichnet**, daß
a) der mindestens eine Faserstreifen (6, 6-2, 19, 19-2) auf entgegengesetzten Oberflächen zu mindestens 50% aus unterschiedlichen Faserwerkstoffen (F1, F2) mit unterschiedlichen Schmelztemperaturen (TS1, TS2) gewählt wird,
b) in jedem Überlappungsbereich (7, 7a, 7b) die jeweiligen Ränder (6a, 6b) eines Faserwerkstoffs (F1) mit einer niedrigeren Schmelztemperatur (TS1) und eines Faserwerkstoffs (F2) mit einer höheren Schmelztemperatur (TS2) aufeinandergelegt werden, und daß
c) in jedem Überlappungsbereich (7, 7a, 7b) mindestens eine der unmittelbar benachbarten Oberflächen von ihren Berührungsflächen her auf eine Temperatur aufgeheizt wird, die zwischen den Schmelztemperaturen (TS1, TS2) der beiden Faserwerkstoffe liegt.

8. Verfahren nach Anspruch 7, **dadurch gekennzeichnet**, daß zwischen die Ränder der Faserstreifen (6, 6-2, 19, 19-2) ein Heizgas mit einer Temperatur (TG) eingeblasen wird, die zwischen den Schmelztemperaturen (TS1, TS2) der beiden Faserwerkstoffe liegt.

9. Verfahren nach Anspruch 7, **dadurch gekennzeichnet**, daß die Temperatur (TG) des Heizgases so gewählt wird, daß der Faserwerkstoff (F1) mit der niedrigeren Schmelztemperatur (TS1) von seiner Oberfläche her örtlich begrenzt aufschmilzt und sich mit dem nicht aufschmelzenden Faserwerkstoff (F2) mit der höheren Schmelztemperatur verbindet.

10. Verfahren nach Anspruch 7, **dadurch gekennzeichnet**, daß mindestens ein Faserstreifen (6, 6-2, 19, 19-2) verwendet wird, dessen eine Oberfläche zumindest überwiegend aus thermoplastischen Fasern besteht und dessen andere Oberfläche zumindest überwiegend aus Mineralfasern besteht.

11. Verfahren nach Anspruch 7, **dadurch gekennzeichnet**, daß mindestens ein Faserstreifen (6, 6-2, 19, 19-2) verwendet wird, der aus einem Verbundwerkstoff aus einer ersten Matte aus Kunststoff-Fasern aus der Gruppe Polyesterfasern, Polyamidfasern und Acrylfasern und aus einer zweiten Matte aus Glasfasern besteht.

12. Verfahren nach Anspruch 11, **dadurch gekennzeichnet**, daß mindestens ein Faserstreifen (6, 6-2, 19, 19-2) verwendet wird, bei dem die beiden Matten durch Nadelung, Vernähen oder Versteppen flächig miteinander verbunden sind.

13. Verfahren nach Anspruch 11, **dadurch gekennzeichnet**, daß ein Faserstreifen (6, 6-2, 19, 19-2) verwendet wird, bei dem die Fasern der Glasfasermatte mit einer harzfreundlichen Oberflächenbeschichtung versehen sind.

14. Verfahren nach Anspruch 8, **dadurch gekennzeichnet**, daß zum Einblasen des Heizgases ein mindestens einfach keilförmiger Heizkörper (51, 52, 53) verwendet wird, der mindestens in derjenigen Oberfläche (51a) Gasaustrittsöffnungen (51b) besitzt, die mit derjenigen Oberfläche des Faserstreifens (6, 6-2, 19, 19-2) in Berührung steht, die die Komponente mit der jeweils niedrigeren Schmelztemperatur (TS1) besitzt.

15. Verfahren nach Anspruch 7, **dadurch gekennzeichnet**, daß die Breite "B" der Verbindungsstelle(n) (6g, 62, 63) in Umfangsrichtung des Schlauchs schmal ist/sind im Verhältnis zur Breite des jeweiligen Überlappungsbereichs (7, 7a, 7b).

16. Verfahren nach Anspruch 7, **dadurch gekennzeichnet**, daß die Verbindungsstellen (6g, 62, 63) des Schlauches in dessen flachliegendem Zustand verschweißt und nach dem Verschweißen durch eine Andruckeinrichtung (55, 56) verfestigt werden, deren Mantellinien zu der Grenzfläche zwischen den flachliegenden Rändern (6a, 6b) parallel verlaufen.

17. Verfahren nach Anspruch 1, **dadurch gekennzeichnet**, daß nacheinander mindestens zwei aus Faserwerkstoff bestehende Innenlagen (12) auf der Ablage (3) erzeugt werden und daß die erste Innenlage (12) vor dem aufbringen der zweiten und jeder weiteren Innenlage (12) um 180° gewendet wird.

18. Verfahren nach Anspruch 17, **dadurch gekennzeichnet**, daß beim Aufbau eines Schlauchs aus mehr als zwei Innenlagen (12) aus Faserwerkstoff die Lagen der Überlappungsbereiche (7, 7a, 7b) durch relative Querverschiebung von Faserstreifen (6, 6-2, 19, 19-2) auf den Umfang des Schlauchs verteilt werden.

19. Verfahren nach Anspruch 1, **dadurch gekennzeichnet**, daß der Schlauch zur Fertigstellung mit einer Außenfolie (25) umhüllt wird, die eine Breite aufweist, die größer ist als der Umfang der letzten, aus Fasermaterial bestehenden Innenlage (12), und daß die Außenfolie (25) unter Bildung eines Überlappungsbereichs (30) um die mindestens eine Innenlage (12) herumgefaltet und im Überlappungsbereich (30) verschweißt wird.

20. Schlauch für die Imprägnierung und Auskleidung von Rohrleitungen und Kanalsystemen mit mindestens einer aus einem Faserwerkstoff bestehenden, mit einem aushärtbaren Harz imprägnierbaren Innenlage (12), deren Ränder (6a, 6b) durch Aufeinanderlegen auf einen gleichen (6, 6-2) oder einen anderen Faserstreifen (19, 19-2) auf dem Umfang des Schlauchs mit mindestens einem in Längsrichtung verlaufenden Überlappungsbereich (7, 7a, 7b) versehen und von einer gegenüber dem Harz undurchlässigen Außenfolie (25) umgeben sind, **dadurch gekennzeichnet**, daß
a) die mindestens eine Innenlage (12) aus mindestens einem Faserstreifen (6, 6-2, 19, 19-2) besteht, der mindestens in Umfangsrichtung des Schlauchs elastisch dehnbarist, und daß
b) die Ränder (6a, 6b) der Innenlage (12) im Überlappungsbereich (7, 7a, 7b) entweder kontinuierlich oder abschnittsweise durch einen thermischen Prozeß irreversibel miteinander verbunden sind, wobei
entweder
b1) der Überlappungsbereich (7, 7a, 7b) zwischen den Rändern (6a, 6b) durch ein ausgehärtetes Harz verbunden ist, das mindestens teilweise in beide Ränder (6a, 6b) eingedrungen ist,
oder
b2) der Faserwerkstoff mindestens einer der Ränder (6a, 6b) im Überlappungsbereich (7, 7a, 7b) oberflächlich angeschmolzen und mit dem jeweils anderen Rand (6a, 6b) verschmolzen ist.

21. Schlauch nach Anspruch 20, **dadurch gekennzeichnet**, daß die Verbindungsstelle(n) (6g, 62, 63) in Umfangsrichtung des Schlauchs schmal ist/sind im Verhältnis zur Breite des jeweiligen Überlappungsbereichs (7, 7a, 7b).

22. Schlauch nach Anspruch 20, **dadurch gekennzeichnet**, daß die mindestens eine, aus Faserwerkstoff bestehende Innenlage (12) aus zwei Faserstreifen (6, 6-2, 19, 19-2) zusammengesetzt ist, von denen der eine breiter ist als der halbe Umfang des Innenschlauchs (2) und der andere maximal die gleiche Breite hat wie der halbe Umfang des Innenschlauchs (2), daß der schmälere Faserstreifen (19, 19-2) mit seinen beiden Rändern entweder über oder unter den Rändern (6a, 6b) des breiteren Faserstreifens (6, 6-2) liegt und zwei Überlappungsbereiche (7a, 7b) bildet.

23. Schlauch nach Anspruch 20, **dadurch gekennzeichnet**, daß
a) der mindestens eine Faserstreifen (6, 6-2, 19, 19-2) auf entgegengesetzten Oberflächen zu mindestens 50% aus unterschiedlichen Faserwerkstoffen (F1, F2) mit unterschiedlichen Schmelztemperaturen (TS1, TS2) besteht,
b) in jedem Überlappungsbereich (7, 7a, 7b) die jeweiligen Ränder (6a, 6b) eines Faserwerkstoffs (F1) mit einer niedrigeren Schmelztemperatur (TS1) und eines Faserwerkstoffs (F2) mit einer höheren Schmelztemperatur (TS2) aufeinandergelegt und miteinander verbunden sind.

24. Schlauch nach Anspruch 23, **dadurch gekennzeichnet**, daß die eine Oberfläche des Faserstreifens zumindest überwiegend aus thermoplastischen Fasern besteht und die andere Oberfläche zumindest überwiegend aus Mineralfasern.

25. Schlauch nach Anspruch 23, **dadurch gekennzeichnet**, daß der mindestens eine Faserstreifen (6, 6-2, 19, 19-2) aus einem Verbundwerkstoff aus einer ersten Matte aus Kunststoff-Fasern aus der Gruppe Polyesterfasern, Polyamidfasern und Acrylfasern und aus einer zweiten Matte aus Glasfasern besteht.

26. Schlauch nach Anspruch 25, **dadurch gekennzeichnet**, daß die beiden Matten durch Nadelung, Vernähen oder Versteppen flächig miteinander verbunden sind.

27. Schlauch nach Anspruch 20, **dadurch gekennzeichnet**, daß bei Verwendung eines Innenschlauchs (2) dieser mit der unmittelbar anliegenden Oberfläche des betreffenden Faserstreifens (6, 19) fest verbunden ist.

28. Vorrichtung zum Herstellen eines Schlauchs mit mindestens einer aus mindestens einem imprägnierfähigen Faserstreifen (6, 6-2, 19, 19-2) bestehenden Innenlage (12) für die Auskleidung von Rohrleitungen und Kanalsystemen, mit einer zumindest im wesentlichen waagrechten Ablage (3) und einer Transporteinrichtung für den Transport des Schlauchs, mit mindestens einer Vorratsrolle (5, 18) mit je einem imprägnierfähigen Faserstreifen (6, 6-2, 19, 19-2), der der Ablage (3) zuführbar ist, und mit Einrichtungen zum Herumfalten der Streifenränder (6a, 6b) **gekennzeichnet durch**
a) ein Führungssystem für die Ausbildung mindestens eines, oberhalb der Ablage (3) liegenden Überlappungsbereiche (7, 7a, 7b) durch Faltung der Ränder (6a, 6b) des mindestens einen Faserstreifens (6, 6-2,) und durch
entweder
b1) mindesten eine Düse (9) für die Aufbringung mindestens einer Harzspur (23) aus einem durch Härtungsstrahlung aushärtbaren Harz ausschließlich in dem mindestens einen Überlappungsbereich (7, 7a, 7b) zwischen den sich überlappenden Rändern (6a, 6b), sowie durch mindestens einen gegenüber den Harzspuren (23) angeordneten Härtungsstrahler (11) zur Ausbildung einer auf dem Umfang geschlossenen Innenlage (12),
oder
b2) mindestens einen Heizkörper (50, 51, 52, 53, 54), der in den mindestens einen Überlappungsbereich (7, 7a, 7b) einführbar ist und durch den der Faserwerkstoff mindestens eines der Ränder (6a, 6b) zum Herstellen einer Schmelzverbindung oberflächlich aufschmelzbar ist, sowie durch mindestens eine Andruckeinrichtung (55, 56) zum Verdichten der Schmelzverbindung,
sowie durch
c) eine Einhüllvorrichtung (37) für die Umhüllung der mindestens einen Innenlage (12) mit einer Außenfolie (25).

29. Vorrichtung nach Anspruch 28 zum Herstellen eines Schlauchs mit mindestens einer aus zwei imprägnierfähigen Faserstreifen (6, 6-2, 19, 19-2) bestehenden Innenlage (12) mit mehreren Vorratsrollen (5, 18) mit den imprägnierfähigen Faserstreifen (6, 6-2, 19, 19-2), **gekennzeichnet durch**
a) zwei Vorratsrollen (5, 18) mit unterschiedlich breiten Faserstreifen (6, 6-2, 19, 19-2), von denen der jeweils breitere Faserstreifen (6, 6-2) von unten und der jeweils breitere Faserstreifen (19, 19-2) von oben zuführbar ist,
b) ein Führungssystem für die Ausbildung zweier, oberhalb der Ablage (3) liegender Überlappungsbereiche (7a, 7b) durch Faltung der Ränder (6a, 6b) des breiteren Faserstreifens (6, 6-2) gegenüber den Rändern des schmäleren Faserstreifens (19, 19-2).

30. Vorrichtung nach Anspruch 28, **dadurch gekennzeichnet**, daß die Ablage (3) aus einem Förderband (14) besteht und das Führungssystem für die Faltung der Ränder (6a, 6b) des jeweils breiteren Faserstreifens (6, 6-2) aus über dem Förderband (14) angeordneten ersten Gleitschienen (15), die unabhängig voneinander quer zur Laufrichtung des Förderbandes (14) verstellbar sind.

31. Vorrichtung nach Anspruch 30, **dadurch gekennzeichnet**, daß hinter den ersten Gleitschienen (15) über dem Förderband (14) zweite Gleitschienen (20) angeordnet sind, die unabhängig voneinander quer zur Laufrichtung des Förderbandes (14) verstellbar sind.

32. Vorrichtung nach Anspruch 28, **dadurch gekennzeichnet**, daß die mindestens eine Düse (9) für die Aufbringung der mindestens einen Harzspur (23) zwischen den ersten (15) und den zweiten Gleitschienen (20) angeordnet ist.

33. Vorrichtung nach Anspruch 31, **dadurch gekennzeichnet**, daß zwischen den zweiten Gleitschienen (20) zwecks Niederhaltung der Ränder des mindestens einen Faserstreifens (6, 6-2, 19, 19-2) in dem mindestens einen Überlappungsbereich (7, 7a, 7b) mindestens eine Andruckplatte (40) mit mindestens einem Fenster (40a) angeordnet ist, über dem sich mindestens ein Härtungsstrahler (11) für die mindestens eine Harzspur (23) befindet.

34. Vorrichtung nach Anspruch 28, **dadurch gekennzeichnet**, daß die Einhüllvorrichtung (37) ein Förderband (28) besitzt, über dem für das Herumfalten eines Folienbandes (27) für die Verbindung der Ränder (27a, 27b) der Außenfolie (25) in spiegelsymmetrischer Anordnung Führungsschienen (29) vorhanden sind, die unabhängig voneinander quer zur Laufrichtung des Förderbandes (28) verstellbar sind.

35. Vorrichtung nach Anspruch 34, **dadurch gekennzeichnet**, daß zwischen den Führungsschienen (29) zwecks Niederhaltung der Ränder (27a, 27b) des Folienbandes (27) im Überlappungsbereich (30) eine Andruckplatte (33) angeordnet ist, hinter der sich eine Schweißvorrichtung (35) für die Erzeugung einer Schweißnaht (36) im Überlappungsbereich (30) des Folienbandes befindet (27).
